# EUROPEAN PATENT APPLICATION

(11) **EP 2 521 212 A1**
(43) Date of publication of application: **07.11.2012**
(21) Application number: 10840969.9
(22) Date of filing: 17.12.2010
(51) Int. Cl.: H01M 10/0567, H01M 10/052, H01M 10/0569

(54) **NON-AQUEOUS ELECTROLYTE AND NON-AQUEOUS ELECTROLYTE BATTERY**

(30) Priority: 06.04.2010 JP 2010087825; 29.12.2009 JP 2009299259
(71) Applicant: Sony Corporation, Tokyo 108-0075 (JP)
(72) Inventor: FUNADA, Yusuke, Tokyo 108-0075 (JP); ODANI, Toru, Tokyo 108-0075 (JP); KUBOTA, Tadahiko, Tokyo 108-0075 (JP)
(74) Representative: Müller - Hoffmann & Partner
(86) International application number: PCT/JP2010/073482
(87) International publication number: WO 2011/081113

(57) **Abstract**

It is to provide a nonaqueous electrolyte and a nonaqueous electrolyte cell capable of providing such an advantage that deterioration of the cell capability due to an antioxidant under a high temperature environment is prevented with the antioxidant in a small content.

The separator 23 is impregnated with an electrolytic solution. The electrolytic solution contains a solvent, an electrolyte salt and an antioxidant, the solvent contains a halogenated carbonate ester represented, a content of the halogenated carbonate ester is from 0.1 to 50% by mass, and a content of the antioxidant is from 0.01 to 5,000 ppm.

## Description

### Technical Field

The present invention relates to a nonaqueous electrolyte and a nonaqueous electrolyte cell. More specifically, the invention relates to a nonaqueous electrolyte containing an organic solvent and an electrolyte salt, and a nonaqueous electrolyte cell using the same.

### Background Art

In recent years, portable electronic devices, such as a camera-integrated VTR (video tape recorder), a portable phone and a notebook PC (personal computer), are widely spread, and reduction of the size and weight thereof and prolongation of the service life thereof are being strongly demanded. According to the trends, a cell, particularly a secondary cell, such as a lithium ion secondary cell, that is capable of providing a large energy density with a light weight is being developed as an electric power source for the portable electronic devices.

The electronic devices in recent years tend to undergo increasing enhancement of the capability and the number of functions thereof, and thus are in such a situation that the secondary cell suffers frequent charge and discharge, which decrease the charging and discharging capacity thereof. Furthermore, the devices are often left under a high temperature upon use due to the diverse applications thereof, and thus there is a demand of further preventing deterioration of the capacity after storing at a high temperature.

In view of the demands, for example, techniques for enhancing the cell capability by preventing deterioration of a positive electrode through addition of an antioxidant to an electrolytic solution or a positive electrode composition have been proposed (see, for example, Patent Documents 1 to 3).

Furthermore, for example, techniques for preventing deterioration of the cell capability by using an electrolytic solution containing a halogenated carbonate ester have been proposed (see, for example, Patent Documents 4 to 6).

### Related Art Documents

### Patent Documents

Patent Document 1: JP-A-62-237680
Patent Document 2: JP-A-2003-123837
Patent Document 3: JP-A-2006-209995
Patent Document 4: JP-A-2007-250380
Patent Document 5: JP-A-2004-63432
Patent Document 6: JP-A-2006-309965

### Summary of the Invention

### Problems to be solved by the Invention

In the techniques where an antioxidant is added to an electrolytic solution or a positive electrode composition, however, it is necessary to add a large amount of an antioxidant for preventing deterioration of the positive electrode. An antioxidant is decomposed with the repetition of charge and discharge, and deteriorates the cell capability. Therefore, the addition of a large amount of an antioxidant becomes an additional factor of deteriorating the cell capability.

Accordingly, an object of the invention is to provide a nonaqueous electrolyte and a nonaqueous electrolyte cell capable of providing such an advantage that deterioration of the cell capability due to an antioxidant under a high temperature environment is prevented with the antioxidant in a small content.

### Means for solving the Problems

For solving the problems, a first invention relates to a nonaqueous electrolyte containing a solvent, an electrolyte salt and an antioxidant, the solvent containing a halogenated carbonate ester represented by the formula (1) or (2), a content of the halogenated carbonate ester being from 0.1 to 50% by mass, and a content of the antioxidant being from 0.01 to 5,000 ppm: 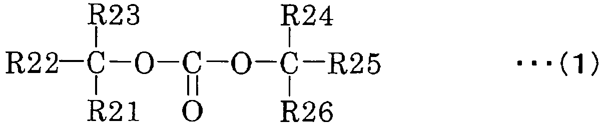 wherein R21 to R26 each independently represent a hydrogen group, a halogen group, an alkyl group or a halogenated alkyl group, provided that at least one of R21 to R26 represents a halogen group or a halogenated alkyl group, 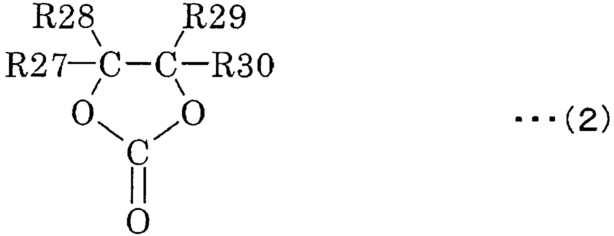 wherein R27 to R30 each independently represent a hydrogen group, a halogen group, an alkyl group or a halogenated alkyl group, provided that at least one of R27 to R30 represents a halogen group or a halogenated alkyl group.

A second invention relates to a nonaqueous electrolyte cell containing a positive electrode, a negative electrode and a nonaqueous electrolyte, the nonaqueous electrolyte containing a solvent, an electrolyte salt and an antioxidant, the solvent containing a halogenated carbonate ester represented by the formula (1) or (2), a content of the halogenated carbonate ester being from 0.1 to 50% by mass based on the nonaqueous electrolyte, and a content of the antioxidant being from 0.01 to 5,000 ppm based on the nonaqueous electrolyte: 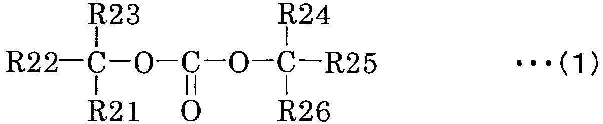 wherein R21 to R26 each independently represent a hydrogen group, a halogen group, an alkyl group or a halogenated alkyl group, provided that at least one of R21 to R26 represents a halogen group or a halogenated alkyl group, 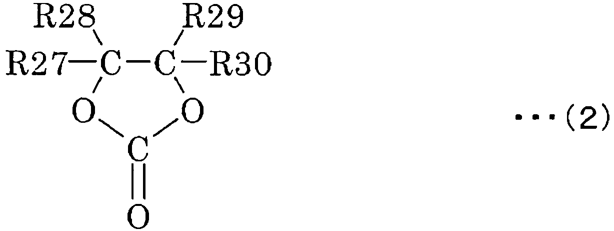 wherein R27 to R30 each independently represent a hydrogen group, a halogen group, an alkyl group or a halogenated alkyl group, provided that at least one of R27 to R30 represents a halogen group or a halogenated alkyl group.

The first invention and the second invention have such a constitution that the nonaqueous electrolyte contains an antioxidant along with the halogenated carbonate ester represented by the formula (1) or (2). According to the constitution, such an advantage can be obtained that deterioration of the cell capability due to the antioxidant under a high temperature environment is prevented with the antioxidant in a small content. Furthermore, the small content of the antioxidant enables prevention of the deterioration of the cell capability due to decomposition of the antioxidant.

### Advantages of the Invention

According to the invention, such an advantage can be obtained that deterioration of the cell capability due to an antioxidant under a high temperature environment is prevented with the antioxidant in a small content.

### Brief Description of the Drawings

Fig. 1 is a cross sectional view showing an example of a structure of a nonaqueous electrolyte cell according to an embodiment of the invention.
Fig. 2 is an enlarged cross sectional view of a part of a wound electrode assembly in Fig. 1.
Fig. 3 is an exploded perspective view showing an example of a structure of a nonaqueous electrolyte cell according to an embodiment of the invention.
Fig. 4 is a cross sectional view of a wound electrode assembly in Fig. 3 on line I-I.

### Embodiments for carrying out the Invention

Embodiments of the invention will be described below with reference to the drawings. The description will be made in the following order.
1. First Embodiment (electrolytic solution)
2. Second Embodiment (first example of nonaqueous electrolyte cell)
3. Third Embodiment (second example of nonaqueous electrolyte cell)
4. Fourth Embodiment (third example of nonaqueous electrolyte cell)
5. Other Embodiments (modified examples)

### 1. First Embodiment

### Electrolytic Solution

An electrolytic solution according to the first embodiment of the invention will be described. The electrolytic solution according to the first embodiment of the invention is used, for example, for an electrochemical device, such as a nonaqueous electrolyte cell. The electrolytic solution contains a solvent, an electrolyte salt dissolved in the solvent, and an antioxidant.

### Solvent

The solvent contains a halogenated carbonate ester represented by the formula (1) or (2). While the details will be mentioned later, the use of the halogenated carbonate ester represented by the formula (1) or (2) contained lowers the content of the antioxidant, thereby preventing deterioration of the cell capability due to decomposition of the antioxidant. The solvent may contain only one kind or two or more kinds of the halogenated carbonate ester represented by the formula (1) or (2). 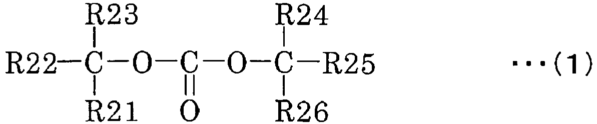 wherein R21 to R26 each independently represent a hydrogen group, a halogen group, an alkyl group or a halogenated alkyl group, provided that at least one of R21 to R26 represents a halogen group or a halogenated alkyl group, 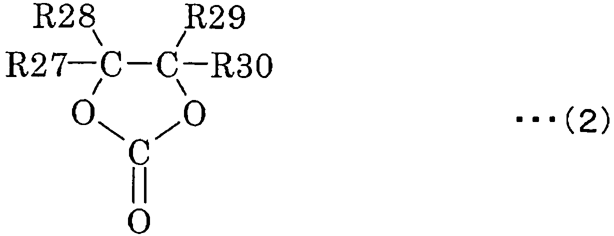 wherein R27 to R30 each independently represent a hydrogen group, a halogen group, an alkyl group or a halogenated alkyl group, provided that at least one of R27 to R30 represents a halogen group or a halogenated alkyl group.

### Halogenated Carbonate Ester

Specific examples of the halogenated carbonate ester represented by the formula (1) include fluoromethyl carbonate (FDMC) and bis(fluoromethyl) carbonate (DFDMC).

Specific examples of the halogenated carbonate ester represented by the formula (2) include 4-fluoro-1,3-dioxolan-2-one (FEC) and 4,5-difluoro-1,3-dioxolan-2-one (DFEC).

### Content

The content of the halogenated carbonate ester represented by the formula (1) or (2) in the electrolytic solution is preferably from 0.1 to 50% by mass, and more preferably from 1 to 10% by mass based on the electrolytic solution, for providing further favorable advantages.

The solvent may contain an additional solvent along with the halogenated carbonate ester represented by the formula (1) or (2).

### Additional Solvent

Examples of the additional solvent include ethylene carbonate (EC), propylene carbonate, butylene carbonate, dimethyl carbonate (DMC), diethyl carbonate, ethylmethyl carbonate, methylpropyl carbonate, γ-butyrolactone, γ-valerolactone, 1,2-dimethoxyethane, tetrahydrofuran, 2-methyltetrahydrofuran, tetrahydropyran, 1,3-dioxolane, 4-methyl-1,3-dioxolane, 1,3-dioxane, 1,4-dioxane, methyl acetate, ethyl acetate, methyl propionate, ethyl propionate, methyl butyrate, methyl isobutyrate, methyl trimethylacetate, ethyl trimethylacetate, acetonitrile, glutaronitrile, adiponitrile, methoxyacetonitrile, 3-methoxypropionitrile, N,N-dimethylformamide, N-methylpyrrolidinone, N-methyloxazolidinone, N,N'-dimethylimidazolidinone, nitromethane, nitroethane, sulfolane, trimethyl phosphate and dimethylsulfoxide.

The additional solvents thus exemplified may be used as a single kind or as a combination of two or more kinds thereof. Among these additional solvents, at least one kind selected from the group consisting of ethylene carbonate, propylene carbonate, dimethyl carbonate, diethyl carbonate and ethylmethyl carbonate is preferred. In this case, a combination of a solvent having a high viscosity (high dielectric constant) (for example, specific dielectric constant ε ≥ 30), such as ethylene carbonate and propylene carbonate, and a solvent having a low viscosity (for example, viscosity ≤ 1 mPa·s), such as ethylmethyl carbonate and diethyl carbonate, is more preferred. This is because the dissociation property of the electrolyte salt and the mobility of the ions are enhanced.

The solvent preferably contains an acid anhydride and a sultone (cyclic sulfonate ester). This is because the electrolytic solution is further enhanced in chemical stability. Examples of the acid anhydride include a carboxylic anhydride, such as succinic anhydride, and an anhydride of a carboxylic acid and a sulfonic acid, such as 2-sulfobenzoic anhydride. Examples of the sultone include propanesultone and propenesultone, and propenesultone is preferred among these.

### Antioxidant

Examples of the antioxidant include a phenol antioxidant, a phosphorus antioxidant, a sulfur antioxidant and an amine antioxidant. Among these, a phenol antioxidant and a phosphorus antioxidant are preferred. The electrolytic solution may contain only one kind of the antioxidant and may contain two or more kinds thereof.

Examples of the phenol antioxidant include a compound having a structure represented by the formula (3) in the molecule thereof. 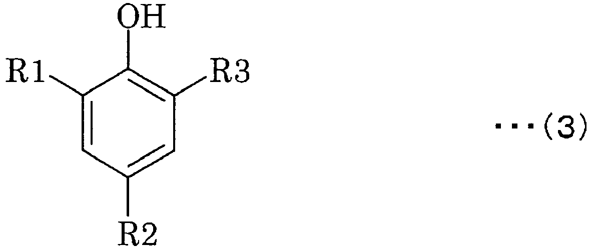 wherein R1 to R3 each independently represent a hydrogen group or an electron donating group. Examples of the electron donating group include an alkyl group, such as a methyl group, an ethyl group and a tert-butyl group, an alkoxy group having from 1 to 5 carbon atoms, such as a methoxy group and an ethoxy group, an ester group and a hydroxyl group. Two or more structures represented by the formula (3) may be contained in one of R1 to R3 through a hydrocarbon group.

Specific examples of the phenol antioxidant include hydroquinone, tert-butylhydroquinone, p-methoxyphenol, cresol, tert-butylcatechol, 2,6-di-tert-butyl-p-cresol, 1,1-bis(2'-methyl-4'-hydroxy-5'-tert-butylphenyl)butane, 2,2'-methylenebis(4-methyl-6-tert-butylphenol), 2,6-di-tert-butyl-4-(N,N-dimethylaminomethyl)phenol, 2,2'-methylenebis(4-ethyl-6-tert-butylphenol), 4,4'-methylenebis(2,6-di-tert-butylphenol), 2,2'-dihydroxy-3,3'-di(α-methylcyclohexyl)-5,5'-dimethyldiphenylmethane, 2,2'-ethylidene-bis(4,6-di-tert-butylphenol), 3,9-bis(2-(3-(3-tert-butyl-4-hydroxy-5-methylphenyl)-propionyloxy)-1,1'-dimethylethyl)-2,4,8,10-tetraoxaspiro[5.5]undecane, 4,4'-thiobis(3-methyl-6-tert-butylphenol), bis(3,5-di-tert-butyl-4-hydroxybenzyl)sulfide, 4,4'-dithiobis(2,6-di-tert-butylphenol), 4,4'-trithiobis(2,6-di-tert-butylphenol), 2,2-thiodiethylenebis(3-(3,5-di-tert-butyl-4-hydroxyphenyl) propionate), 2,4-bis(n-octylthio)-6-(4-hydroxy-3',5'-di-tert-butylanilino)-1,3,5-triazine, N,N'-bis(3-(3,5-di-tert-butyl-4-hydroxyphenyl)propionyl)-hydrazine, tris(3,5-di-tert-butyl-4-hydroxyphenyl) isocyanurate, tris(3,5-di-tert-butyl-4-hydroxybenzyl) isocyanurate, 1,3,5-tris(4-tert-butyl-3-hydroxy-2,6-dimethylbenzyl) isocyanurate, triethylene glycol N-bis-3-(3-tert-butyl-4-hydroxy-5-methylphenyl)propionate, 1,6-hexanediol bis(3-(3,5-di-tert-butyl-4-hydroxyphenyl)propionate), pentaerythritol tetrakis(3-(3,5-di-tert-butyl-4-hydroxyphenyl)propionate), hexamethylenebis(3-(3,5-di-tert-butyl-4-hydroxyphenyl) propionate), octadecyl 3-(3,5-di-tert-butyl-4-hydroxyphenyl)propionate, N,N=-hexamethylenebis(3,5-di-tert-butyl-4-hydroxy-hydrocyanamide), 1,3,5-trimethyl-2,4,6-tris(3,5-di-tert-butyl-4-hydroxybenzyl)benzene, 2,4-bis((octylthio)methyl)-o-cresol, isooctyl 3-(3,5-di-tert-butyl-4-hydroxyphenyl)propionate, tetrakis(methylene-3-(3,5-di-tert-butyl-4-hydroxyphenyl) propionate)methane and octyl 3,5-di-tert-butyl-4-hydroxybenzopropionate.

Examples of the phosphorus antioxidant include a compound having a phosphite ester basic skeleton having three alkoxy groups bonded to phosphorus represented by the formula (4). 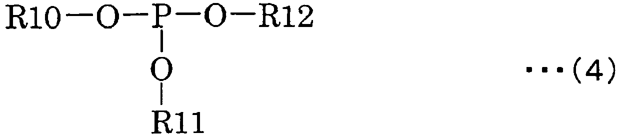 wherein R10 to R12 each independently represent an alkyl group or an aryl group, which may have a substituent. Specific examples of R10 include a hydrocarbon group having 3 or more carbon atoms, and preferably include an alkyl group having 3 or more carbon atoms, such as a propyl group and a tert-butyl group, and an aryl group having from 6 to 15 carbon atoms, which may have a substituent, such as a phenyl group, a tert-butylphenyl group, a trimethylphenyl group and a dimethylphenyl group. R11 and R12 each independently represents a hydrocarbon group. R11 and R12 may be bonded to each other.

Specific examples of the phosphorus antioxidant include triphenyl phosphite, tris(2,4-di-tert-butylphenyl) phosphite, 2,2'-ethylidenebis(4,6-di-tert-butylphenol) fluorophosphite, 2,2'-ethylidenebis(4,6-di-tert-butylphenyl) octyl phosphite, diphenyl isodecyl phosphite, phenyl diisodecyl phosphite, tris(nonylphenyl) phosphite, diisodecyl pentaerythritol phosphite, tris(2,4-di-tert-butylphenyl) phosphite, cyclic neopentantetraylbis(octadecyl) phosphite, cyclic neopentantetraylbis(2,4-di-tert-butylphenyl) phosphite, cyclic neopentantetraylbis(2,4-di-tert-butyl-4-methylphenyl) phosphite, tris(2-tert-butyl-4-(3-tert-butyl-4-hydroxy-5-methylphenylthio)-5-methylphenyl) phosphite, octyl diphenyl phosphite, di(nonylphenyl) pentaerythritol diphosphite, bis(2,4-di-tert-phenyl) pentaerythritol diphosphite, bis(2,6-di-tert-butyl-4-methyphenyl) pentaerythritol diphosphite, bis(2,4,6-tri-tert-butylphenyl) pentaerythritol diphosphite, bis(2,4-dicumylphenyl) pentaerythritol diphosphite, tetra(tridecyl) isopropylidenediphenol diphosphite, tetra(tridecyl) 4,4'-n-butylidenebis(2-tert-butyl-5-methylphenol) diphosphite, hexa(tridecyl) 1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide and 2,2'-methylenebis(4,6-tert-butylphenyl) 2-ethylhexyl phosphite.

Examples of the sulfur antioxidant include a sulfide or a disulfide represented by the formula (5). 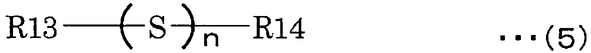 wherein R13 and R14 each independently represent a hydrocarbon group having 3 or more carbon atoms, which may have a substituent. Preferred examples of the hydrocarbon group having 3 or more carbon atoms, which may have a substituent, include an alkyl group having from 3 to 10 carbon atoms and an aryl group, which may have a substituent, such as a phenyl group, a tert-butylphenyl group, a trimethylphenyl group and a hydroxyphenyl group. R13 and R14 may be bonded to each other. Numeral n is 1 or 2.

Specific examples of the sulfur antioxidant include dilauryl 3,3'-thiodipropionate, dimyristyl 3,3'-thiodipropionate, distearyl 3,3'-thiodipropionate, diphenylsulfide, diphenyldisulfide, dibutylsulfide and phenothiazine.

Examples of the amine antioxidant include a compound represented by the formula (6). 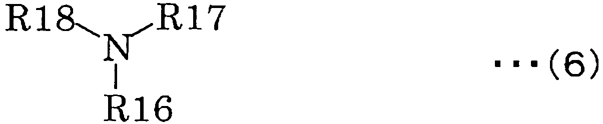 wherein R16 represents a hydrocarbon group, which may have a substituent. Examples of the hydrocarbon group, which may have a substituent, include an alkyl group, such as a methyl group, a propyl group and a tert-butyl group, and an aryl group, which may have a substituent, such as a phenyl group, an alkylphenyl group, e.g., a trimethylphenyl group, an aminophenyl group and a naphthyl group. R17 and R18 each independently represents a hydrogen group or a hydrocarbon group. R17 and R18 may be bonded to each other.

Specific examples of the amine antioxidant include p-phenylenediamine, 4-aminophenylamine, N,N'-dimethyl-1,4-phenylenediamine, N,N'-diphenyl-p-phenylenediamine, N-isopropyl-N'-phenyl-p-phenylenediamine, N-(1,3-dimethylbutyl)-N'-phenyl-p-phenylenediamine, N,N'-di-2-naphtyl-p-phenylenediamine, diphenylamine, N-phenyl-β-naphthylamine, 4,4'-dicumyldiphenylamine and 4,4'-dioctyldiphenylamine.

### Content

The content of the antioxidant in the electrolytic solution is preferably from 0.01 to 5,000 ppm, and more preferably from 0.1 to 1,000 ppm for further providing the advantages. The unit ppm herein is based on the mass of the electrolytic solution.

The electrolytic solution contains the antioxidant along with the halogenated carbonate ester represented by the formula (1) or (2). The use of the antioxidant in combination with the halogenated carbonate ester represented by the formula (1) or (2) provides such an advantage that deterioration of the cell capability at a high temperature due to the antioxidant is prevented with the antioxidant even in a small content (for example, from 0.01 to 5,000 ppm). Furthermore, the reduction of the content of the antioxidant prevents deterioration of the cell capability due to decomposition of the antioxidant.

It is considered that these advantages are obtained based on the following factors. That is, a film formed through electrochemical decomposition of the halogenated carbonate ester represented by the formula (1) or (2) prevents oxidation reaction other than the charging and discharging reaction. The mechanism prevents mass consumption of the antioxidant in the initial stage of charging, and as a result, the content of the antioxidant can be decreased. Furthermore, the film of the halogenated carbonate ester represented by the formula (1) or (2) prevents excessive decomposition of the antioxidant upon charging and discharging, whereby the antioxidant exists over the charging and discharging cycles for a prolonged period of time, and deterioration of the cell capability at a high temperature can be prevented.

### Electrolyte Salt

The electrolyte salt may contain, for example, one kind or two or more kinds of a light metal salt, such as a lithium salt.

Examples of the lithium salt include lithium hexafluorophosphate (LiPF₆), lithium tetrafluoroborate, lithium perchlorate, lithium hexafluoroarsenate, lithium tetraphenylborate (LiB(C₆H₅)₄), lithium methanesulfonate (LiCH₃SO₃), lithium trifluoromethanesulfonate (LiCF₃SO₃), lithium tetrachloroaluminate (LiAlCl₄), dilithium hexafluorosilicate (Li₂SiF₆), lithium chloride (LiCl) and lithium bromide. The electrolyte salts thus exemplified may be used in combination of them.

### Advantages

The electrolytic solution according to the first embodiment of the invention provides such advantages upon using, for example, in a nonaqueous electrolyte cell that deterioration of the cell capability due to the antioxidant under a high temperature environment is prevented with the antioxidant even in a small content by using the halogenated cyclic carbonate ester represented by the formula (1) or (2) and the antioxidant in combination.

### 2. Second Embodiment

### Structure of Cell

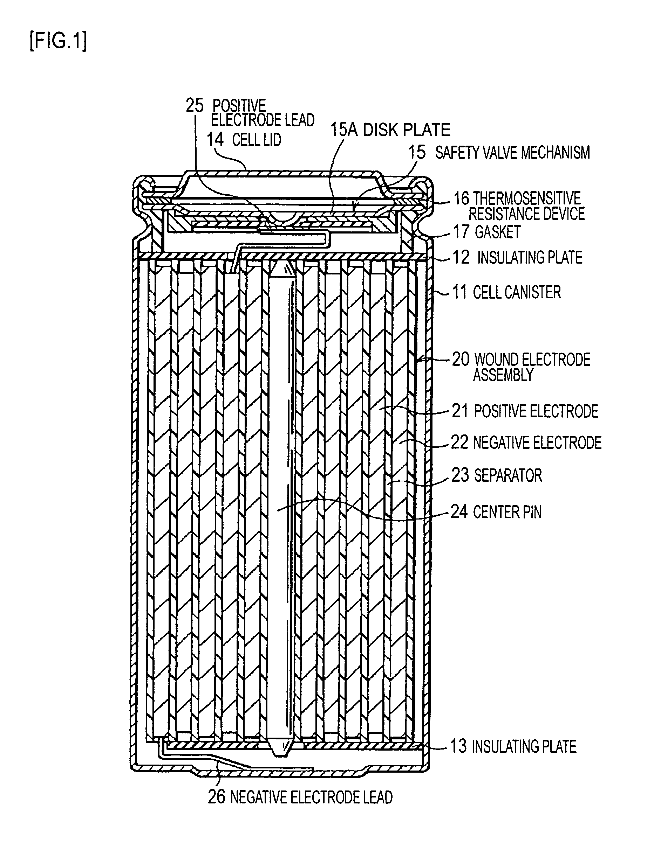

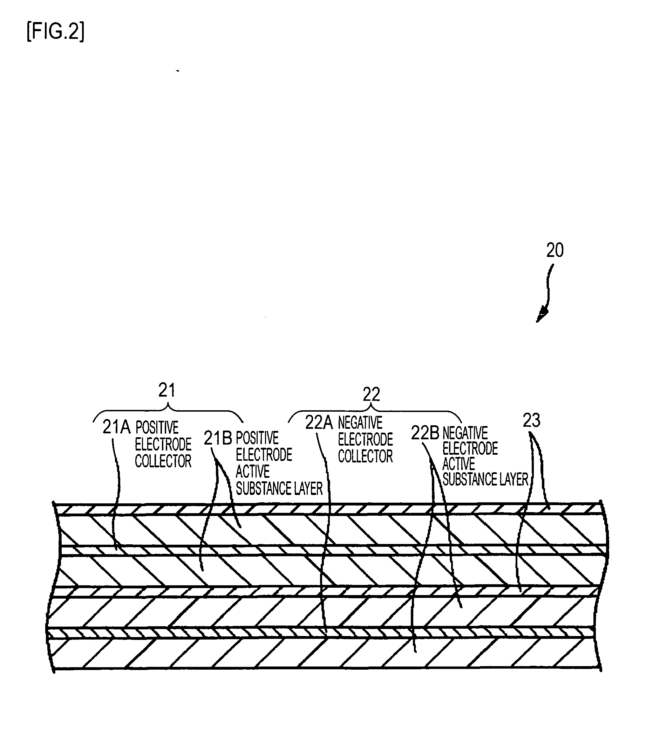

A nonaqueous electrolyte cell according to the second embodiment of the invention will be described with reference to Figs. 1 and 2. Fig. 1 shows the cross sectional structure of the nonaqueous electrolyte cell according to the second embodiment of the invention. Fig. 2 shows an enlarged view of a part of a wound electrode assembly 20 shown in Fig. 1. The nonaqueous electrolyte cell is, for example, a lithium ion secondary cell where the capacity of a negative electrode 22 is shown based on occlusion and release of lithium, which is an electrode reaction substance.

The nonaqueous electrolyte cell mainly has a substantially cylindrical hollow cell canister 11 having housed thereinside a wound electrode assembly 20 containing a positive electrode 21 and a negative electrode 22 wound through a separator 23, and a pair of insulating plates 12 and 13. The cell structure using the cylindrical cell canister 11 is referred to as a cylinder type.

### Positive Electrode

The positive electrode 21 has, for example, a positive electrode collector 21A having a pair of surfaces, having provided on both the surfaces thereof positive electrode active substance layers 21B. The positive electrode active substance layer 21B may be provided only on one surface of the positive electrode collector 21A.

The positive electrode collector 21A is constituted, for example, by a metallic material, such as aluminum, nickel and stainless steel.

The positive electrode active substance layer 21B contains, as a positive electrode active substance, one kind or two or more kinds of a positive electrode material capable of occluding and releasing lithium, and may further contain other materials, such as a binder and an electroconductive agent, depending on necessity.

The positive electrode material capable of occluding and releasing lithium is preferably, for example, a lithium-containing compound. This is because a high energy density is obtained. Examples of the lithium-containing compound include a composite oxide containing lithium and a transition metal element, and a phosphoric acid compound containing lithium and a transition metal element. The chemical formulae thereof may be expressed, for example, by LiₓM1O₂ (0.05 ≤ x ≤ 1.10) or Li_{y}M2PO₄ (0.05 s y ≤ 1.10). In the formulae, M1 and M2 each represent one or more kinds of a transition metal element.

Examples of the composite oxide containing lithium and a transition metal element include a lithium cobalt composite oxide (LiₓCoO₂ (0.05 ≤ x ≤ 1.10)), a lithium nickel composite oxide (LiₓNiO₂ (0.05 ≤ x s 1.10)), a lithium nickel cobalt composite oxide (LiₓNi_{1-z}Co_{z}O₂ (0.05 ≤ x ≤ 1.10, 0 < z < 1)), a lithium nickel cobalt manganese composite oxide (LiₓNi_{(1-v-w)}CoᵥMn_{w}O₂ (0.05 ≤ x ≤ 1.10, 0 < v < 1, 0 < w < 1, 0 < v+w < 1)), a lithium nickel cobalt aluminum composite oxide (LiₓNi_{(1-v-w)}CoᵥAl_{w}O₂ (0.05 ≤ x s 1.10, 0 < v < 1, 0 < w < 1, v+w < 1)), and a lithium manganese composite oxide having a spinel structure (LiMn₂O₄). Examples of the phosphoric acid compound containing lithium and a transition metal element include a lithium iron phosphoric acid compound (LiFePO₄) and a lithium iron manganese phosphoric acid compound (LiFe₁₋ᵤMnᵤPO₄ (0 < u < 1)).

Other examples of the positive electrode material capable of occluding and releasing lithium include an oxide, such as titanium oxide, vanadium oxide and manganese dioxide, a disulfide, such as titanium disulfide and molybdenum disulfide, a chalcogen compound, such as niobium selenide, sulfur, and an electroconductive polymer, such as polyaniline and polythiophene.

The positive electrode material capable of occluding and releasing lithium may be other materials than those shown above. The positive electrode materials exemplified above may be used after mixing two or more kinds thereof as an arbitrary combination.

Examples of the binder include synthetic rubber, such as styrene-butadiene rubber, fluorine rubber and ethylenepropylene-diene, and a polymer material, such as polyvinylidene fluoride. These materials may be used solely or as a mixture of plural kinds thereof.

Examples of the electroconductive agent include a carbon material, such as graphite and carbon black. These materials may be used solely or as a mixture of plural kinds thereof. The electroconductive agent may be a metallic material or an electroconductive polymer as far as it is a material having electroconductivity.

### Negative Electrode

The negative electrode 22 has, for example, a negative electrode collector 22A having a pair of surfaces, having provided on both the surfaces thereof negative electrode active substance layers 22B. The negative electrode active substance layer 22B may be provided only on one surface of the negative electrode collector 22A.

The negative electrode collector 22A is constituted, for example, by a metallic material, such as copper, nickel and stainless steel.

The negative electrode active substance layer 22B contains, as a negative electrode active substance, one kind or two or more kinds of a negative electrode material capable of occluding and releasing lithium, and may further contain other materials, such as a binder and an electroconductive agent, depending on necessity. The binder and the electroconductive agent used may be the similar ones as described for the positive electrode.

Examples of the negative electrode material capable of occluding and releasing lithium include a carbon material. Examples of the carbon material include non-graphitizable carbon, graphitizable carbon, artificial graphite, such as MCMB (meso-carbon microbeads), natural graphite, pyrolytic carbon, coke, graphite, glassy carbon, a burned organic polymer compound, carbon black, carbon fibers and activated carbon. Among these, coke includes pitch coke, needle coke and petroleum coke. The burned organic polymer compound is a material obtained by carbonizing a polymer material, such as a phenol resin and a furan resin, by burning at a suitable temperature, and a part thereof may be classified into non-graphitizable carbon or graphitizable carbon.

In addition to the carbon material, examples of the negative electrode material capable of occluding and releasing lithium also include a material that is capable of occluding and releasing lithium and has at least one kind of a metallic element and a metalloid element as a constitutional element. This is because a high energy density is obtained. The negative electrode material of this type may be a elemental substance, an alloy or a compound of a metallic element or a metalloid element, and may be a material having a phase containing one kind or two or more kinds thereof as a part of the material. The term "alloy" referred in the invention includes a material formed of two or more kinds of metallic elements and also includes a material formed of one or more kind of a metallic element and one or more kind of a metalloid element. The "alloy" may contain a nonmetallic element. The structure thereof includes a solid solution, an eutectic crystal (an eutectic mixture), an intermetallic compound, and a material containing two or more kinds thereof.

Examples of the metallic element and the metalloid element include a metallic element and a metalloid element capable of forming an alloy with lithium. Specific examples thereof include magnesium (Mg), boron (B), aluminum (Al), gallium (Ga), indium (In), silicon (Si), germanium (Ge), tin (Sn), lead (Pb), bismuth (Bi), cadmium (Cd), silver (Ag), zinc (Zr), hafnium (Hf), zirconium (Zr), yttrium (Y), palladium (Pd) and platinum (Pt). Among these, at least one kind of silicon and tin is preferred, and silicon is more preferred. This is because they have a large capability of occluding and releasing lithium, thereby providing a high energy density.

Examples of the negative electrode material containing at least one kind of silicon and tin include an elemental substance, an alloy or a compound of silicon, an elemental substance, an alloy or a compound of tin, and a material having a phase containing one kind or two or more kinds thereof as a part of the material.

Examples of the alloy of silicon include those containing, as the second constitutional element other than silicon, at least one kind selected from the group consisting of tin (Sn), nickel (Ni), copper (Cu), iron (Fe), cobalt (Co), manganese (Mn), zinc (Zn), indium (In), silver (Ag), titanium (Ti), germanium (Ge), bismuth (Bi), antimony (Sb) and chromium (Cr). Examples of the alloy of tin include those containing, as the second constitutional element other than tin (Sn), at least one kind selected from the group consisting of silicon (Si), nickel (Ni), copper (Cu), iron (Fe), cobalt (Co), manganese (Mn), zinc (Zn), indium (In), silver (Ag), titanium (Ti), germanium (Ge), bismuth (Bi), antimony (Sb) and chromium (Cr).

Examples of the compound of tin or the compound of silicon include compounds containing oxygen (O) or carbon (C), which may further contain the aforementioned second constitutional elements in addition to tin (Sn) or silicon (Si).

In particular, the negative electrode material containing at least one kind of silicon (Si) and tin (Sn) is preferably, for example, a material containing tin (Sn) as the first constitutional element, and the second constitutional element and the third constitutional element in addition to tin (Sn). This negative electrode material may be used in combination with the aforementioned negative electrode materials. The second constitutional element is at least one selected from the group consisting of cobalt (Co), iron (Fe), magnesium (Mg), titanium (Ti), vanadium (V), chromium (Cr), manganese (Mn), nickel (Ni), copper (Cu), zinc (Zn), gallium (Ga), zirconium (Zr), niobium (Nb), molybdenum (Mo), silver (Ag), indium (In), cerium (Ce), hafnium (Hf), tantalum (Ta), tungsten (W), bismuth (Bi) and silicon (Si). The third constitutional element is at least one selected from the group consisting of boron (B), carbon (C), aluminum (Al) and phosphorus (P). This is because the second element and the third element contained enhances the cycle characteristics.

Among these, an SnCoC-containing material that contains as constitutional element tin (Sn), cobalt (Co) and carbon (C), and has a content of carbon (C) in a range of from 9.9 to 29.7% by mass, and a ratio of cobalt (Co) to the total of tin (Sn) and cobalt (Co) (Co/(Sn+Co)) in a range of from 30 to 70% by mass is preferred. This is because the compositional ranges provide a high energy density and also excellent cycle characteristics.

The SnCoC-containing material may further contain an additional constitutional element depending on necessity. Preferred examples of the additional constitutional element include silicon (Si), iron (Fe), nickel (Ni), chromium (Cr), indium (In), niobium (Nb), germanium (Ge), titanium (Ti), molybdenum (Mo), aluminum (Al), phosphorus (P), gallium (Ga) and bismuth (Bi), and two or more kinds thereof may be contained. This is because the capacity characteristics or the cyclic characteristics are further enhanced.

The SnCoC-containing material has a phase containing tin (Sn), cobalt (Co) and carbon (C), and the phase preferably has a structure having low crystallinity or an amorphous structure. In the SnCoC-containing material, at least a part of carbon as the constitutional element is preferably bonded to the metallic element or the metalloid element as the additional constitutional element. This is because while it is considered that decrease of the cyclic characteristics occurs due to aggregation or crystallization of tin (Sn) or the like, the aggregation or crystallization can be prevented by bonding the carbon to the additional element.

Examples of the method for investigating the bonding state of the elements include X-ray photoelectron spectroscopy (XPS). In the XPS, the peak of the 1s orbital of carbon (C1s) in the form of graphite appears at 284.5 eV in the apparatus calibrated for energy to provide 84.0 eV for the 4f orbital of gold atom (Au4f). The peak of the surface contamination carbon appears at 284.8 eV. In the case where the charge density of the carbon element is increased, for example, in the case where the carbon is bonded to a metallic element or a metalloid element, the peak for C1s appears in a region lower than 284.5 eV. That is, in the case where the peak of the synthesized wave of C1s obtained for the SnCoC-containing material appears in a region lower than 284.5 eV, at least a part of the carbon (C) contained in the SnCoC-containing material is bonded to the metallic element or the metalloid element as the additional constitutional element.

In the XPS, for example, the peak of C1s is used for calibrating the energy axis of the spectrum. In general, surface contamination carbon is present on the surface, and therefore, the peak of C1s of the surface contamination carbon is designated as 284.8 eV, which is used as the energy standard. In the XPS, the waveform of the peak of C1s is obtained as the form containing the peak of the surface contamination carbon and the peak of the carbon in the SnCoC-containing material, and therefore, the peak of the surface contamination carbon and the peak of the carbon in the SnCoC-containing material are separated from each other by analyzing with a commercially available software. Upon analyzing the waveform, the position of the major peak present on the side of the lowest bound energy is used as the energy standard (284.8 eV).

Examples of the negative electrode material capable of occluding and releasing lithium also include a metal oxide or a polymer compound that is capable of occluding and releasing lithium. Examples of the metal oxide include iron oxide, ruthenium oxide and molybdenum oxide, and examples of the polymer compound include polyacetylene, polyaniline and polypyrrole.

The negative electrode material capable of occluding and releasing lithium may be other materials than those mentioned above. The negative electrode material may be used as a mixture of two or more kinds thereof as an arbitrary combination.

The negative electrode active substance layer 22B may be formed, for example, by any one of the gas phase method, the liquid phase method, the thermal spraying method, the baking method and coating, and two or more of them may be combined. Upon forming the negative electrode active substance layer 22B by the gas phase method, the liquid phase method, the thermal spraying method, the baking method or a combination of two or more of them, at least a part of the interface between the negative electrode active substance layer 22B and the negative electrode collector 22A preferably forms an alloy. Specifically, it is preferred that at the interface, the constitutional element of the negative electrode collector 22A is diffused into the negative electrode active substance layer 22B, the constitutional element of the negative electrode active substance layer 22B is diffused into the negative electrode collector 22A, or the constitutional elements are mutually diffused to each other. This is because breakage of the negative electrode active substance layer 22B due to expansion and contraction thereof associated with charging and discharging can be prevented, and the electron conductivity between the negative electrode active substance layer 22B and the negative electrode collector 22A can be enhanced.

Examples of the gas phase method include the physical accumulation method and the chemical accumulation method, specifically, the vacuum deposition method, the sputtering method, the ion plating method, the laser ablation method, the thermal chemical vapor deposition (CVD) method and the plasma chemical vapor deposition method. Examples of the liquid phase method include the known methods, such as electroplating and electroless plating, may be used. The baking method is, for example, such a method that the negative electrode active substance in the form of granule mixed with a binder is dispersed in a solvent and then coated, followed by subjecting to a heat treatment at a temperature higher than the melting point of the binder or the like. Known methods may be used for the baking method, and examples thereof include an atmosphere backing method, the reaction baking method and the hot-press baking method.

### Separator

The separator 23 isolates the positive electrode 21 and the negative electrode 22 from each other, and allows passage of lithium ions therethrough while preventing short circuit of electric current due to contact between the electrodes. The separator 23 is constituted, for example, by a porous film formed of a synthetic resin, such as polytetrafluoroethylene, polypropylene and polyethylene, a porous film formed of ceramics, or the like, and may be a film containing two or more kinds of the porous films laminated on each other. The separator 23 is impregnated with the electrolytic solution according to the first embodiment mentioned above.

### Production Method of Cell

The nonaqueous electrolyte cell may be produced, for example, by the following production method.

### Production of Positive Electrode

The positive electrode 21 is produced. Firstly, the positive electrode active substance, the binder and the electroconductive agent are mixed to form a positive electrode composition, which is then dispersed in an organic solvent, thereby preparing a positive electrode composition slurry in the paste form. Subsequently, the positive electrode composition slurry is uniformly coated on both surfaces of the positive electrode collector 21A with a doctor blade, a bar coater or the like, followed by drying. Finally, the coated film is molded by compressing with a roll-pressing machine or the like under heating depending on necessity, thereby forming the positive electrode active substance layer 21B. In this case, the molding and compressing operation may be repeated plural times.

### Production of Negative Electrode

The negative electrode 22 is produced. Firstly, the negative electrode material, the binder, and depending on necessity the electroconductive agent are mixed to form a negative electrode composition, which is then dispersed in an organic solvent, thereby preparing a negative electrode composition slurry in the paste form. Subsequently, the negative electrode composition slurry is uniformly coated on both surfaces of the negative electrode collector 22A with a doctor blade, a bar coater or the like, followed by drying. Finally, the coated film is molded by compressing with a roll-pressing machine or the like under heating depending on necessity, thereby forming the negative electrode active substance layer 22B.

The negative electrode 22 may also be produced in the following manner. Firstly, the negative electrode collector 22A formed of an electrolytic copper foil is prepared, and then the negative electrode material is accumulated on both surfaces of the negative electrode collector 22A by the gas phase method, such as the vapor deposition method, thereby forming plural negative electrode active substance particles. Thereafter, depending on necessity, an oxide-containing film is formed by the liquid phase method, such as the liquid phase deposition method, or a metallic material is formed by the liquid phase method, such as the electroplating method, or in alternative, both the films are formed, thereby forming the negative electrode active substance layer 22B.

### Fabrication of Cell

The nonaqueous electrolyte cell is fabricated in the following manner. Firstly, a positive electrode lead 25 is attached to the positive electrode collector 21A by welding or the like, and a negative electrode lead 26 is attached to the negative electrode collector 22A by welding or the like. Subsequently, the positive electrode 21 and the negative electrode 22 are wound through the separator 23 to produce the wound electrode assembly 20, and a center pin 24 is inserted to the winding center thereof. Subsequently, the wound electrode assembly 20 is held with a pair of insulating plates 12 and 13 and housed inside the cell canister 11, the end of the positive electrode lead 25 is welded to a safety valve mechanism 15, and the end of the negative electrode lead 26 is welded to the cell canister 11.

Subsequently, the electrolytic solution according to the first embodiment is charged into the interior of the cell canister 11, thereby impregnating the separator 23 therewith. Finally, a cell lid 14, the safety valve mechanism 15 and a thermosensitive resistance device 16 are fixed to the opening end of the cell canister 11 through a gasket 17 by crimping. Consequently, the nonaqueous electrolyte cell shown in Figs. 1 and 2 is completed.

### Advantages

The second embodiment of the invention provides such advantages that deterioration of the cell capability due to the antioxidant under a high temperature environment is prevented with the antioxidant even in a small content by using the halogenated cyclic carbonate ester represented by the formula (1) or (2) and the antioxidant in combination.

### 3. Third Embodiment

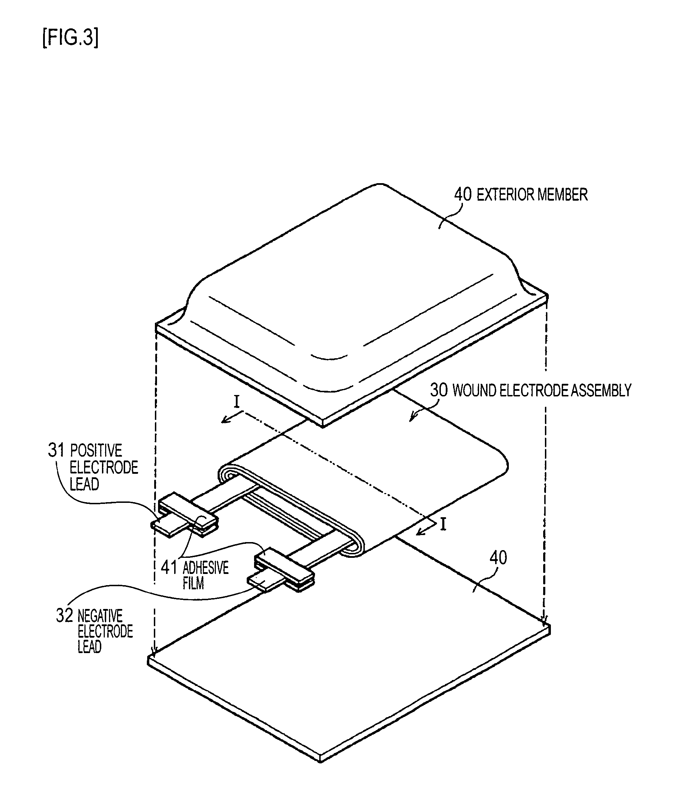

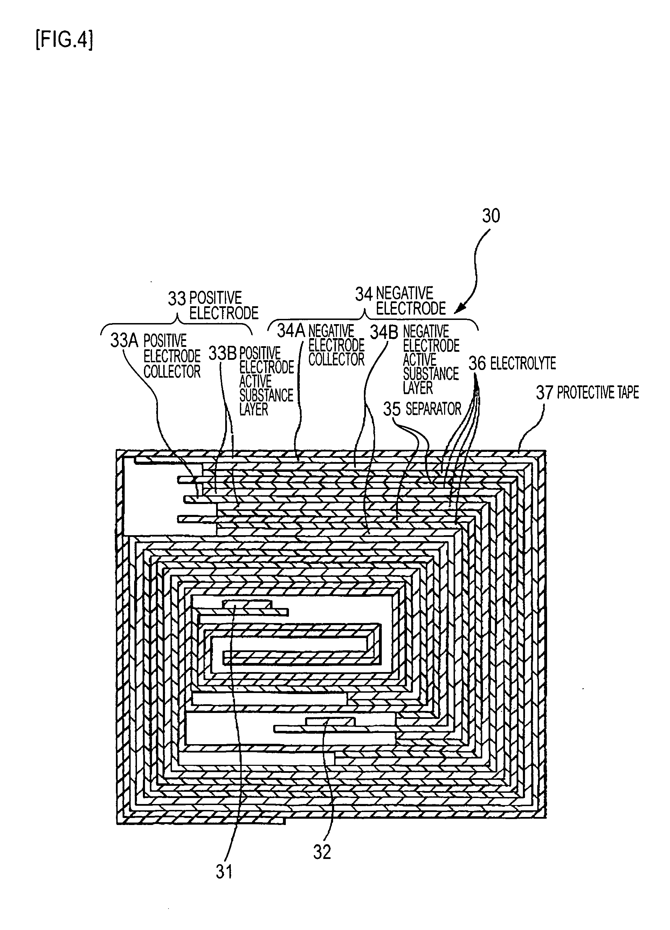

A nonaqueous electrolyte cell according to the third embodiment of the invention will be described. Fig. 3 is an exploded perspective structure of the nonaqueous electrolyte cell according to the third embodiment of the invention, and Fig. 4 shows with enlargement the cross section of a wound electrode assembly 30 in Fig. 3 on line I-I.

The nonaqueous electrolyte cell mainly has a film exterior member 40 having housed thereinside a wound electrode assembly 30 having a positive electrode lead 31 and a negative electrode lead 32 attached thereto. The cell structure using the film exterior member 40 is referred to as a laminated film type.

The positive electrode lead 31 and the negative electrode lead 32 are drawn from the inside of the exterior member 40 to the outside thereof in the same direction. The positive electrode lead 31 is constituted, for example, by a metallic material, such as aluminum, and the negative electrode lead 32 is constituted, for example, by a metallic material, such as copper, nickel or stainless steel. The metallic materials are in the form, for example, of a thin plate or a mesh.

The exterior member 40 is constituted, for example, by an aluminum laminated film containing a nylon film, an aluminum foil and a polyethylene film, which are laminated in this order. The exterior member 40 has such a structure, for example, that two rectangular aluminum laminated films are adhered at the outer peripheral portions thereof to each other with an adhesive to make the polyethylene films to face the wound electrode assembly 30.

Adhesive films 41 are inserted between the exterior member 40, and the positive electrode lead 31 and the negative electrode lead 32, thereby preventing the outside air from invading. The adhesive film 41 is constituted by a material that has adhesiveness to the positive electrode lead 31 and the negative electrode lead 32. Examples of the material include a polyolefin resin, such as polyethylene, polypropylene, modified polyethylene and modified polypropylene.

Instead of the aluminum laminated film, the exterior member 40 may be constituted by a laminated film having another laminated structure, or may be constituted by a polymer film, such as polypropylene, or a metallic film.

Fig. 4 shows the cross sectional structure of the wound electrode assembly 30 in Fig. 3 on line I-I. The wound electrode assembly 30 contains a positive electrode 33 and a negative electrode 34 laminated and wound through a separator 35 and an electrolyte 36, and the outermost circumferential surface thereof is protected with a protective tape 37.

The positive electrode 33 has, for example, a positive electrode collector 33A having on both surfaces thereof positive electrode active substance layers 33B. The negative electrode 34 has, for example, a negative electrode collector 34A having on both surfaces thereof negative electrode active substance layers 34B, and the negative electrode active substance layers 34B are disposed to face the positive electrode active substance layers 33B. The constitutions of the positive electrode collector 33A, the positive electrode active substance layer 33B, the negative electrode collector 34A, the negative electrode active substance layer 34B and the separator 35 may be the same as the constitutions of the positive electrode collector 21A, the positive electrode active substance layer 21B, the negative electrode collector 22A, the negative electrode active substance layer 22B and the separator 23 of the second embodiment, respectively.

The electrolyte 36 contains an electrolytic solution according to the first embodiment and a polymer compound retaining the same, and is a so-called gelled electrolyte. The gelled electrolyte is preferred since a high ion conductivity (for example, 1 mS/cm or more at room temperature) is obtained, and leakage of liquid is prevented.

Examples of the polymer compound include polyacrylonitrile, polyvinylidene fluoride, a copolymer of polyvinilidene fluoride and polyhexafluoropyrene, polytetrafluoroethylene, polyhexafluoropropylene, polyethylene oxide, polypropylene oxide, polyphosphazene, polysiloxane, polyvinyl acetate, polyvinyl alcohol, polymethyl methacrylate, polyacrylic acid, polymethacrylic acid, styrene-butadiene rubber, nitrile-butadiene rubber, polystyrene and polycarbonate. These may be used solely or as a mixture of plural kinds thereof. Among these, polyacrylonitrile, polyvinylidene fluoride, polyhexafluoropropylene and polyethylene oxide are preferred. This is because they are electrochemically stable.

### Production Method of Cell

The nonaqueous electrolyte cell is produced, for example, by the following three production methods (i.e., the first to third production methods).

### First Production Method

In the first production method, firstly, for example, the positive electrode active substance layers 33B are formed on both surfaces of the positive electrode collector 33A to produce the positive electrode 33 in the similar procedures as the production procedures of the positive electrode 21 and the negative electrode 22 in the second embodiment. The negative electrode active substance layers 34B are formed on both surfaces of the negative electrode collector 34A to produce the negative electrode 34.

Subsequently, a precursor solution containing the electrolytic solution according to the first embodiment, the polymer compound and a solvent is prepared and coated on the positive electrode 33 and the negative electrode 34, and then the solvent is evaporated to form the gelled electrolyte 36. Subsequently, the positive electrode lead 31 is attached to the positive electrode collector 33A, and the negative electrode lead 32 is attached to the negative electrode collector 34A.

Subsequently, the positive electrode 33 and the negative electrode 34 having the electrolyte 36 formed are laminated through the separator 35, and then wound in the longitudinal direction, and the protective tape 37 is adhered to the outermost circumferential surface thereof, thereby producing the wound electrode assembly 30. Finally, for example, the wound electrode assembly 30 is held between the exterior members 40 in the form of two sheets of films, and the outer peripheral portions of the exterior members 40 are adhered to each other by heat-sealing or the like, thereby enclosing the wound electrode assembly 30 therein. At this time, the adhesive films 41 are inserted between the positive electrode lead 31 and the negative electrode lead 32, and the exterior member 40. According to the procedures, the nonaqueous electrolyte cell shown in Figs. 3 and 4 is completed.

### Second Production Method

In the second production method, firstly, the positive electrode lead 31 is attached to the positive electrode 33, and the negative electrode lead 32 is attached to the negative electrode 34. Subsequently, the positive electrode 33 and the negative electrode 34 are laminated through the separator 35 and then wound, and the protective tape 37 is adhered to the outermost circumferential surface thereof, thereby producing a wound assembly as a precursor of the wound electrode assembly 30.

Subsequently, the wound assembly is held between the exterior members 40 in the form of two sheets of films, and the outer peripheral portions thereof except for the outer peripheral portions at one edge are adhered to each other by heat-sealing or the like, thereby enclosing the wound assembly in the exterior members 40 in the form of bag. Subsequently, a composition for an electrolyte containing the electrolytic solution according to the first embodiment, a monomer as a raw material of the polymer compound, a polymerization initiator, and depending on necessity other materials, such as a polymerization inhibitor, is prepared and charged into the interior of the exterior members 40 in the form of bag, and then the opening of the exterior members 40 in the form of bag is sealed by heat-sealing or the like. Finally, the monomer is thermally polymerized to form the polymer compound, thereby forming the gelled electrolyte 36. According to the procedures, the nonaqueous electrolyte cell shown in Figs. 3 and 4 is completed.

### Third Production Method

In the third production method, firstly, the wound assembly is produced and enclosed in the exterior members 40 in the form of bag in the similar manner as in the second production method except that a separator 35 having a polymer compound coated on both surfaces thereof.

Examples of the polymer compound coated on the separator 35 include a polymer containing vinylidene fluoride as a component, i.e., a homopolymer, a copolymer and a multicomponent copolymer. Specific examples thereof include polyvinilidene fluoride, a two-component copolymer containing vinylidene fluoride and hexafluoropropylene, and a three-component copolymer containing vinylidene fluoride, hexafluoropropylene and chlorotrifluoroethylene.

The polymer compound may contain, in addition to the polymer containing vinylidene fluoride as a component, one kind or two or more kinds of other polymer compound. Subsequently, the electrolytic solution according to the first embodiment is prepared and charged into the interior of the exterior members 40, and then the opening of the exterior members 40 is sealed by heat-sealing or the like. Finally, the exterior members 40 are heated under application of a load thereon, thereby adhering the separator 35 to the positive electrode 33 and the negative electrode 34 through the polymer compound. According to the procedures, the polymer compound is impregnated with the electrolytic solution, and the polymer compound is gelled to for the electrolyte 36. Thus, the nonaqueous electrolyte cell shown in Figs. 3 and 4 is completed.

### Advantages

The third embodiment provides the similar advantages as in the second embodiment.

### 4. Fourth Embodiment

A nonaqueous electrolyte cell according to the fourth embodiment of the invention will be described. The nonaqueous electrolyte cell according to the fourth embodiment is the same as the nonaqueous electrolyte cell according to the third embodiment except that an electrolytic solution is used as it is instead of the electrolytic solution retained with the polymer compound (i.e., the electrolyte 36). Accordingly, the structures thereof will be described below with reference mainly to the points that are different from the third embodiment.

### Structure of Cell

The nonaqueous electrolyte cell according to the fourth embodiment uses an electrolytic solution instead of the gelled electrolyte 36. Accordingly, the wound electrode assembly 30 has a structure, from which the electrolyte 36 is omitted, and the separator 35 is impregnated with the electrolytic solution according to the first embodiment.

### Production Method of Cell

The nonaqueous electrolyte cell is produced, for example, in the following manner.

Firstly, for example, a positive electrode composition is prepared by mixing a positive electrode active substance, a binder and an electroconductive agent, and dispersed in a solvent, such as N-methyl-2-pyrrolidone, to produce a positive electrode composition slurry. The positive electrode composition slurry is then coated on both surfaces, and dried and molded by compressing, thereby forming positive electrode active substance layers 33B, and thus a positive electrode 33 is produced. Subsequently, for example, a positive electrode lead 31 is connected to a positive electrode collector 33A by ultrasonic welding, spot welding or the like.

A negative electrode composition is prepared by mixing a negative electrode material and a binder, and dispersed in a solvent, such as N-methyl-2-pyrrolidone, to produce a negative electrode composition slurry. The negative electrode composition slurry is then coated on both surfaces of a negative electrode collector 34A, and dried and molded by compressing, thereby forming negative electrode active substance layers 34B, and thus a negative electrode 34 is produced. Subsequently, for example, a negative electrode lead 32 is connected to the negative electrode collector 34A by ultrasonic welding, spot welding or the like.

Subsequently, the positive electrode 33 and the negative electrode 34 are wound through a separator 35 and held inside exterior members 40, and the electrolytic solution according to the first embodiment is charged into the interior of the outer exterior members 40, followed by sealing the exterior members 40. According to the procedures, the nonaqueous electrolyte cell shown in Figs. 3 and 4 is obtained.

### Advantages

The fourth embodiment provides the similar advantages as in the second embodiment.

### Example

The invention will be specifically described with reference to examples below, but the invention is not limited to the examples.

### Example 1-1

As Example 1-1, a secondary cell shown in Figs. 1 and 2 was produced in the following manner. Firstly, a positive electrode 21 was produced. Specifically, lithium carbonate (Li₂CO₃) and cobalt carbonate (CoCO₃) were mixed at a ratio of 0.5/1 and baked in the air at 900°C for 5 hours, thereby providing a lithium cobalt composite oxide (LiCoO₂).

Subsequently, 91 parts by mass of the lithium cobalt composite oxide as a positive electrode active substance, 6 parts by mass of graphite as an electroconductive agent, and 3 parts by mass of polyvinilidene fluoride as a binder were mixed to provide a positive electrode composition, which was then dispersed in N-methyl-2-pyrrolidone, thereby providing a positive electrode composition slurry in the form of paste.

Finally, the positive electrode composition slurry was coated and dried on both surfaces of a positive electrode collector 21A formed of an aluminum foil (thickness: 12 µm) in the form of strip, and then molded by compressing with a roll-pressing machine, thereby forming a positive electrode active substance layers 21B. Thereafter, a positive electrode lead 25 formed of aluminum was attached to one end of the positive electrode collector 21A by welding.

A negative electrode 22 was then produced. For producing the negative electrode 22, 97 parts by mass of artificial graphite powder as a negative electrode active substance and 3 parts by mass of polyvinilidene fluoride as a binder were mixed to provide a negative electrode composition, which was then dispersed in N-methyl-2-pyrrolidone. The composition was coated and dried on both surfaces of a negative electrode collector 22A formed of a copper foil (thickness: 15 µm) in the form of strip, and then molded by compressing, thereby forming negative electrode active substance layers 22B. Thereafter, a negative electrode lead 26 formed of nickel was attached to one end of the negative electrode collector 22A.

Subsequently, the positive electrode 21, a separator 23 formed of a finely porous polypropylene film (thickness: 25 µm) and the negative electrode 22 were laminated in this order and then wound plural times into a spiral form, and the winding end was fixed with an adhesive tape, thereby providing a wound electrode assembly 20. Subsequently, a steel cell canister 11 having nickel plating was prepared, the wound electrode assembly 20 was held between a pair of insulating plates 12 and 13, the negative electrode lead 26 was welded to the cell canister 11, the positive electrode lead 25 was welded to a safety value mechanism 15, and the wound electrode assembly 20 was housed inside the cell canister 11. Subsequently, an electrolytic solution was charged into the interior of the cell canister 11 by the depressurizing method.

The electrolytic solution was prepared in the following manner. Specifically, ethylene carbonate (EC), dimethyl carbonate (DMC), 4-fluoro-1,3-dioxolan-2-one (FEC) and LiPF₆ were mixed at a mass ratio (EC/DMC/FEC/LiPF₆) of 19.9/65/0.1/15, to which a phenol antioxidant (2,6-di-tert-butyl-4-cresol (BHT)) was added in an amount of 0.01 ppm based on the amount of the electrolytic solution, thereby preparing the electrolytic solution.

Subsequently, the cell canister 11 was crimped through a gasket 17 having asphalt coated on the surface thereof, thereby fixing the safety valve mechanism 15, a thermosensitive resistance device 16 and a cell lid 14. According to the procedures, the interior of the cell canister 11 was ensured to be air-tight, thereby providing the cylinder type secondary cell shown in Figs. 1 and 2.

### Example 1-2

A secondary cell of Example 1-2 was produced in the same manner as in Example 1-1 except that the amount of BHT added was changed to 0.1 ppm.

### Example 1-3

A secondary cell of Example 1-3 was produced in the same manner as in Example 1-1 except that the amount of BHT added was changed to 1 ppm upon preparation of the electrolytic solution.

### Example 1-4

A secondary cell of Example 1-4 was produced in the same manner as in Example 1-1 except that the amount of BHT added was changed to 10 ppm upon preparation of the electrolytic solution.

### Example 1-5

A secondary cell of Example 1-5 was produced in the same manner as in Example 1-1 except that the amount of BHT added was changed to 1,000 ppm upon preparation of the electrolytic solution.

### Example 1-6

A secondary cell of Example 1-6 was produced in the same manner as in Example 1-1 except that the amount of BHT added was changed to 2,000 ppm upon preparation of the electrolytic solution.

### Example 1-7

A secondary cell of Example 1-7 was produced in the same manner as in Example 1-1 except that the amount of BHT added was changed to 5,000 ppm upon preparation of the electrolytic solution.

### Examples 1-8 to 1-14

Secondary cells of Examples 1-8 to 1-14 were produced in the same manner as in Examples 1-1 to 1-7, respectively, except that the amount of EC was changed to 19 wt%, and the amount of FEC was changed to 1 wt%, upon preparation of the electrolytic solution.

### Examples 1-15 to 1-21

Secondary cells of Examples 1-15 to 1-21 were produced in the same manner as in Examples 1-1 to 1-7, respectively, except that the amount of EC was changed to 10 wt%, and the amount of FEC was changed to 10 wt%, upon preparation of the electrolytic solution.

### Examples 1-22 to 1-28

Secondary cells of Examples 1-22 to 1-28 were produced in the same manner as in Examples 1-1 to 1-7, respectively, except that EC was not mixed, the amount of DMC was changed to 35 wt%, and the amount of FEC was changed to 50 wt%, upon preparation of the electrolytic solution.

### Comparative Example 1-1

A secondary cell of Comparative Example 1-1 was produced in the same manner as in Example 1-1 except that the amount of EC was changed to 20 wt%, FEC was not mixed, and BHT was not added, upon preparation of the electrolytic solution.

### Comparative Example 1-2

A secondary cell of Comparative Example 1-2 was produced in the same manner as in Example 1-1 except that the amount of EC was changed to 10 wt%, the amount of FEC was changed to 10 wt%, and BHT was not added, upon preparation of the electrolytic solution.

### Comparative Example 1-3

A secondary cell of Comparative Example 1-3 was produced in the same manner as in Example 1-1 except that the amount of EC was changed to 20 wt%, FEC was not mixed, and the amount of BHT added was changed to 30,000 ppm, upon preparation of the electrolytic solution.

### Comparative Example 1-4

A secondary cell of Comparative Example 1-4 was produced in the same manner as in Example 1-1 except that the amount of EC was changed to 20 wt%, FEC was not mixed, and the amount of BHT added was changed to 10 ppm, upon preparation of the electrolytic solution.

### Comparative Example 1-5

A secondary cell of Comparative Example 1-5 was produced in the same manner as in Example 1-1 except that the amount of EC was changed to 10 wt%, the amount of FEC was changed to 10 wt%, and the amount of BHT added was changed to 30,000 ppm, upon preparation of the electrolytic solution.

### Comparative Example 1-6

A secondary cell of Comparative Example 1-6 was produced in the same manner as in Example 1-1 except that EC and DMC were not mixed, the amount of FEC was changed to 85 wt%, and the amount of BHT added was changed to 10 ppm, upon preparation of the electrolytic solution.

### Comparative Example 1-7

An electrolytic solution prepared in the following manner was used. Specifically, EC, vinylene carbonate (VC), dimethyl carbonate (DMC) and LiPF₆ were mixed at a mass ratio (EC/VC/DMC/LiPF₆) of 10/10/65/15, thereby preparing the electrolytic solution. BHT was not added to the electrolytic solution. A secondary cell of Comparative Example 1-7 was produced in the same manner as in Example 1-1 except for the above.

### Comparative Example 1-8

A secondary cell of Comparative Example 1-8 was produced in the same manner as in Comparative Example 1-7 except that BHT was added in an amount of 1 ppm upon preparation of the electrolytic solution.

### Comparative Example 1-9

A secondary cell of Comparative Example 1-9 was produced in the same manner as in Comparative Example 1-7 except that BHT was added in an amount of 10 ppm upon preparation of the electrolytic solution.

### Comparative Example 1-10

A secondary cell of Comparative Example 1-10 was produced in the same manner as in Comparative Example 1-7 except that BHT was added in an amount of 1,000 ppm upon preparation of the electrolytic solution.

### Comparative Example 1-11

A secondary cell of Comparative Example 1-11 was produced in the same manner as in Comparative Example 1-7 except that BHT was added in an amount of 30,000 ppm upon preparation of the electrolytic solution.

The secondary cells of Examples 1-1 to 1-28 and the secondary cells of Comparative Examples 1-1 to 1-11 were subjected to the high temperature cycle test described below.

### High Temperature Cycle Test

A first charge and discharge cycle was performed at 23°C, and the second charge and discharge cycle was then performed in an atmosphere at 65°C, thereby measuring the discharge capacity for the second cycle. Subsequently, charge and discharge cycles were performed in the same atmosphere until the number of cycles reached 150, thereby measuring the discharge capacity for the 150th cycle. Finally, the discharge capacity maintenance factor (%) = ((discharge capacity for 150th cycle)/(discharge capacity for second cycle)) x 100 (%) was calculated.

The charge and discharge condition for one cycle was that the cell was charged with a constant current density of 1 mA/cm² until the cell voltage reached the prescribed voltage (4.2 V), further charged with a constant voltage of the prescribed voltage until the current density reached 0.02 mA/cm², and then discharged with a constant current density of 1 mA/cm² until the cell voltage reached 3 V.

The measurement results are shown in Table 1.

**Table 1**

| | EC (wt%) | DMC (wt%) | Halogenated carbonate ester (wt%) | | BHT (ppm) | LiPF₆ (wt%) | Discharge capacity maintenance factor (%) |
|---|---|---|---|---|---|---|---|
| Example 1-1 | 19.9 | 65 | FEC | 0.1 | 0.01 | 15 | 48 |
| Example 1-2 | 19.9 | 65 | FEC | 0.1 | 0.1 | 15 | 51 |
| Example 1-3 | 19.9 | 65 | FEC | 0.1 | 1 | 15 | 73 |
| Example 1-4 | 19.9 | 65 | FEC | 0.1 | 10 | 15 | 75 |
| Example 1-5 | 19.9 | 65 | FEC | 0.1 | 1,000 | 15 | 72 |
| Example 1-6 | 19.9 | 65 | FEC | 0.1 | 2,000 | 15 | 54 |
| Example 1-7 | 19.9 | 65 | FEC | 0.1 | 5,000 | 15 | 54 |
| Example 1-8 | 19 | 65 | FEC | 1 | 0.01 | 15 | 48 |
| Example 1-9 | 19 | 65 | FEC | 1 | 0.1 | 15 | 54 |
| Example 1-10 | 19 | 65 | FEC | 1 | 1 | 15 | 76 |
| Example 1-11 | 19 | 65 | FEC | 1 | 10 | 15 | 79 |
| Example 1-12 | 19 | 65 | FEC | 1 | 1,000 | 15 | 76 |
| Example 1-13 | 19 | 65 | FEC | 1 | 2,000 | 15 | 58 |
| Example 1-14 | 19 | 65 | FEC | 1 | 5,000 | 15 | 57 |
| Example 1-15 | 10 | 65 | FEC | 10 | 0.01 | 15 | 51 |
| Example 1-16 | 10 | 65 | FEC | 10 | 0.1 | 15 | 57 |
| Example 1-17 | 10 | 65 | FEC | 10 | 1 | 15 | 81 |
| Example 1-18 | 10 | 65 | FEC | 10 | 10 | 15 | 83 |
| Example 1-19 | 10 | 65 | FEC | 10 | 1,000 | 15 | 78 |
| Example 1-20 | 10 | 65 | FEC | 10 | 2,000 | 15 | 57 |
| Example 1-21 | 10 | 65 | FEC | 10 | 5,000 | 15 | 56 |
| Example 1-22 | - | 35 | FEC | 50 | 0.01 | 15 | 47 |
| Example 1-23 | - | 35 | FEC | 50 | 0.1 | 15 | 54 |
| Example 1-24 | - | 35 | FEC | 50 | 1 | 15 | 77 |
| Example 1-25 | - | 35 | FEC | 50 | 10 | 15 | 80 |
| Example 1-26 | - | 35 | FEC | 50 | 1,000 | 15 | 77 |
| Example 1-27 | - | 35 | FEC | 50 | 2,000 | 15 | 58 |
| Example 1-28 | - | 35 | FEC | 50 | 5,000 | 15 | 57 |
| Comparative Example 1-1 | 20 | 65 | - | - | - | 15 | 32 |
| Comparative Example 1-2 | 10 | 65 | FEC | 10 | - | 15 | 43 |
| Comparative Example 1-3 | 20 | 65 | - | - | 30,000 | 15 | 39 |
| Comparative Example 1-4 | 20 | 65 | - | - | 10 | 15 | 35 |
| Comparative Example 1-5 | 10 | 65 | FEC | 10 | 30,000 | 15 | 43 |
| Comparative Example 1-6 | - | - | FEC | 85 | 10 | 15 | 29 |
| | | | | | | | |

| | EC (wt%) | DMC (wt%) | VC (wt%) | | BHT (ppm) | LiPF₆ (wt%) | Discharge capacity maintenance factor (%) |
|---|---|---|---|---|---|---|---|
| Comparative Example 1-7 | 10 | 65 | 10 | | - | 15 | 42 |
| Comparative Example 1-8 | 10 | 65 | 10 | | 1 | 15 | 40 |
| Comparative Example 1-9 | 10 | 65 | 10 | | 10 | 15 | 41 |
| Comparative Example 1-10 | 10 | 65 | 10 | | 1,000 | 15 | 45 |
| Comparative Example 1-11 | 10 | 65 | 10 | | 30,000 | 15 | 55 |

### Evaluation

As shown in Table 1, the combination use of FEC and the antioxidant enhanced the high temperature cycle characteristics with the phenol antioxidant (BHT) even in a small content (0.01 to 5,000 ppm). For example, according to the comparison of Example 1-4 and Comparative Example 1-4, Comparative Example 1-4 that did not use the combination of FEC and the antioxidant failed to provide advantages equivalent to Example 1-4, with a content of the antioxidant of 10 ppm. According to Examples 1-1 to 1-28, it was understood that further enhanced high temperature cycle characteristics were obtained when the content of the phenol antioxidant (BHT) was from 1 to 1,000 ppm.

### Example 2-1

An electrolytic solution prepared in the following manner was used. Specifically, ethylene carbonate (EC), dimethyl carbonate (DMC), 4-fluoro-1,3-dioxolan-2-one (FEC) and LiPF₆ were mixed at a mass ratio (EC/DMC/FEC/LiPF₆) of 19.9/65/0.1/15, to which a phosphorus antioxidant (tris(2,4-di-tert-butylphenyl) phosphite (TBP)) was added in an amount of 0.01 ppm based on the amount of the electrolytic solution, thereby preparing the electrolytic solution. A secondary cell of Example 2-1 was produced in the same manner as in Example 1-1 except for the above.

### Example 2-2

A secondary cell of Example 2-2 was produced in the same manner as in Example 2-1 except that the amount of TBP added was changed to 0.1 ppm.

### Example 2-3

A secondary cell of Example 2-3 was produced in the same manner as in Example 2-1 except that the amount of TBP added was changed to 1 ppm upon preparation of the electrolytic solution.

### Example 2-4

A secondary cell of Example 2-4 was produced in the same manner as in Example 2-1 except that the amount of TBP added was changed to 10 ppm upon preparation of the electrolytic solution.

### Example 2-5

A secondary cell of Example 2-5 was produced in the same manner as in Example 2-1 except that the amount of TBP added was changed to 1,000 ppm upon preparation of the electrolytic solution.

### Example 2-6

A secondary cell of Example 2-6 was produced in the same manner as in Example 2-1 except that the amount of TBP added was changed to 2,000 ppm upon preparation of the electrolytic solution.

### Example 2-7

A secondary cell of Example 2-7 was produced in the same manner as in Example 2-1 except that the amount of TBP added was changed to 5,000 ppm upon preparation of the electrolytic solution.

### Examples 2-8 to 2-14

Secondary cells of Examples 2-8 to 2-14 were produced in the same manner as in Examples 2-1 to 2-7, respectively, except that the amount of EC was changed to 19 wt%, and the amount of FEC was changed to 1 wt%, upon preparation of the electrolytic solution.

### Examples 2-15 to 2-21

Secondary cells of Examples 2-15 to 2-21 were produced in the same manner as in Examples 2-1 to 2-7, respectively, except that the amount of EC was changed to 10 wt%, and the amount of FEC was changed to 10 wt%, upon preparation of the electrolytic solution.

### Examples 2-22 to 2-28

Secondary cells of Examples 2-22 to 2-28 were produced in the same manner as in Examples 2-1 to 2-7, respectively, except that EC was not mixed, the amount of DMC was changed to 35 wt%, and the amount of FEC was changed to 50 wt%, upon preparation of the electrolytic solution.

### Comparative Example 2-1

A secondary cell of Comparative Example 2-1 was produced in the same manner as in Example 2-1 except that the amount of EC was changed to 20 wt%, FEC was not mixed, and the amount of TBP added was changed to 30,000 ppm, upon preparation of the electrolytic solution.

### Comparative Example 2-2

A secondary cell of Comparative Example 2-2 was produced in the same manner as in Example 2-1 except that the amount of EC was changed to 20 wt%, FEC was not mixed, and the amount of TBP added was changed to 10 ppm, upon preparation of the electrolytic solution.

### Comparative Example 2-3

A secondary cell of Comparative Example 2-3 was produced in the same manner as in Example 2-1 except that the amount of EC was changed to 10 wt%, the amount of FEC was changed to 10 wt%, and the amount of TBP added was changed to 30,000 ppm, upon preparation of the electrolytic solution.

### Comparative Example 2-4

A secondary cell of Comparative Example 2-4 was produced in the same manner as in Example 2-1 except that EC and DMC were not mixed, the amount of FEC was changed to 85 wt%, and the amount of TBP added was changed to 10 ppm, upon preparation of the electrolytic solution.

### Comparative Example 2-5

An electrolytic solution prepared in the following manner was used. Specifically, ethylene carbonate (EC), vinylene carbonate (VC), dimethyl carbonate (DMC) and LiPF₆ were mixed at a mass ratio (EC/VC/DMC/LiPF₆) of 10/10/65/15, thereby preparing the electrolytic solution. TBP was not added to the electrolytic solution. A secondary cell of Comparative Example 2-5 was produced in the same manner as in Example 2-1 except for the above.

### Comparative Example 2-6

A secondary cell of Comparative Example 2-6 was produced in the same manner as in Comparative Example 2-5 except that TBP was added in an amount of 1 ppm upon preparation of the electrolytic solution.

### Comparative Example 2-7

A secondary cell of Comparative Example 2-7 was produced in the same manner as in Comparative Example 2-5 except that TBP was added in an amount of 10 ppm upon preparation of the electrolytic solution.

### Comparative Example 2-8

A secondary cell of Comparative Example 2-8 was produced in the same manner as in Comparative Example 2-5 except that TBP was added in an amount of 1,000 ppm upon preparation of the electrolytic solution.

### Comparative Example 2-9

A secondary cell of Comparative Example 2-9 was produced in the same manner as in Comparative Example 2-5 except that TBP was added in an amount of 30,000 ppm upon preparation of the electrolytic solution.

The secondary cells of Examples 2-1 to 2-28 and the secondary cells of Comparative Examples 2-1 to 2-9 were subjected to the high temperature cycle test in the same manner as in Example 1-1. The measurement results are shown in Table 2. For including Comparative Examples 1-1 and 1-2 in evaluation, the measurement results of Comparative Examples 1-1 and 1-2 are also shown in Table 2.

**Table 2**

| | EC (wt%) | DMC (wt%) | Halogenated carbonate ester (wt%) | | TBP (ppm) | LiPF₆ (wt%) | Discharge capacity maintenance factor (%) |
|---|---|---|---|---|---|---|---|
| Example 2-1 | 19.9 | 65 | FEC | 0.1 | 0.01 | 15 | 47 |
| Example 2-2 | 19.9 | 65 | FEC | 0.1 | 0.1 | 15 | 51 |
| Example 2-3 | 19.9 | 65 | FEC | 0.1 | 1 | 15 | 71 |
| Example 2-4 | 19.9 | 65 | FEC | 0.1 | 10 | 15 | 72 |
| Example 2-5 | 19.9 | 65 | FEC | 0.1 | 1,000 | 15 | 69 |
| Example 2-6 | 19.9 | 65 | FEC | 0.1 | 2,000 | 15 | 53 |
| Example 2-7 | 19.9 | 65 | FEC | 0.1 | 5,000 | 15 | 53 |
| Example 2-8 | 19 | 65 | FEC | 1 | 0.01 | 15 | 50 |
| Example 2-9 | 19 | 65 | FEC | 1 | 0.1 | 15 | 54 |
| Example 2-10 | 19 | 65 | FEC | 1 | 1 | 15 | 75 |
| Example 2-11 | 19 | 65 | FEC | 1 | 10 | 15 | 77 |
| Example 2-12 | 19 | 65 | FEC | 1 | 1,000 | 15 | 75 |
| Example 2-13 | 19 | 65 | FEC | 1 | 2,000 | 15 | 54 |
| Example 2-14 | 19 | 65 | FEC | 1 | 5,000 | 15 | 52 |
| Example 2-15 | 10 | 65 | FEC | 10 | 0.01 | 15 | 51 |
| Example 2-16 | 10 | 65 | FEC | 10 | 0.1 | 15 | 56 |
| Example 2-17 | 10 | 65 | FEC | 10 | 1 | 15 | 80 |
| Example 2-18 | 10 | 65 | FEC | 10 | 10 | 15 | 82 |
| Example 2-19 | 10 | 65 | FEC | 10 | 1,000 | 15 | 79 |
| Example 2-20 | 10 | 65 | FEC | 10 | 2,000 | 15 | 57 |
| Example 2-21 | 10 | 65 | FEC | 10 | 5,000 | 15 | 57 |
| Example 2-22 | - | 35 | FEC | 50 | 0.01 | 15 | 49 |
| Example 2-23 | - | 35 | FEC | 50 | 0.1 | 15 | 54 |
| Example 2-24 | - | 35 | FEC | 50 | 1 | 15 | 76 |
| Example 2-25 | - | 35 | FEC | 50 | 10 | 15 | 79 |
| Example 2-26 | - | 35 | FEC | 50 | 1,000 | 15 | 75 |
| Example 2-27 | - | 35 | FEC | 50 | 2,000 | 15 | 58 |
| Example 2-28 | - | 35 | FEC | 50 | 5,000 | 15 | 55 |
| Comparative Example 1-1 | 20 | 65 | - | - | - | 15 | 32 |
| Comparative Example 1-2 | 10 | 65 | FEC | 10 | - | 15 | 43 |
| Comparative Example 2-1 | 20 | 65 | - | - | 30,000 | 15 | 37 |
| Comparative Example 2-2 | 20 | 65 | - | - | 10 | 15 | 31 |
| Comparative Example 2-3 | 10 | 65 | FEC | 10 | 30,000 | 15 | 41 |
| Comparative Example 2-4 | - | - | FEC | 85 | 10 | 15 | 28 |
| | | | | | | | |

| | EC (wt%) | DMC (wt%) | VC (wt%) | | TBP (ppm) | LiPF₆ (wt%) | Discharge capacity maintenance factor (%) |
|---|---|---|---|---|---|---|---|
| Comparative Example 2-5 | 10 | 65 | 10 | | none | 15 | 43 |
| Comparative Example 2-6 | 10 | 65 | 10 | | 1 | 15 | 41 |
| Comparative Example 2-7 | 10 | 65 | 10 | | 10 | 15 | 39 |
| Comparative Example 2-8 | 10 | 65 | 10 | | 1,000 | 15 | 47 |
| Comparative Example 2-9 | 10 | 65 | 10 | | 30,000 | 15 | 57 |

### Evaluation

As shown in Table 2, the combination use of FEC and the phosphorus antioxidant (TBP) enhanced the high temperature cycle characteristics with the phosphorus antioxidant (TBP) even in a small content (0.01 to 5,000 ppm). For example, according to the comparison of Example 2-4 and Comparative Example 2-2, Comparative Example 2-2 that did not use the combination of FEC and the antioxidant failed to provide advantages equivalent to Example 2-4, with a content of the phosphorus antioxidant (TBP) of 10 ppm. According to Examples 2-1 to 2-28, it was understood that further enhanced high temperature cycle characteristics were obtained when the content of the phosphorus antioxidant (TBP) was from 1 to 1,000 ppm.

### Example 3-1

An electrolytic solution prepared in the following manner was used. Specifically, EC, FEC, DMC and LiPF₆ were mixed at a mass ratio (EC/FEC/DMC/LiPF₆) of 19.9/0.1/65/15, to which a phenol antioxidant (2,2'-methylenebis(4-methyl-6-tert-butylphenol) (MMBP) was added in an amount of 10 ppm based on the amount of the electrolytic solution, thereby preparing the electrolytic solution. A secondary cell of Comparative Example 3-1 was produced in the same manner as in Example 1-1 except for the above.

### Example 3-2

A secondary cell of Example 3-2 was produced in the same manner as in Example 3-1 except that the amount of EC was changed to 10 wt%, and the amount of FEC was changed to 10 wt%, upon preparation of the electrolytic solution.

### Example 3-3

A secondary cell of Example 3-3 was produced in the same manner as in Example 3-1 except that EC was not mixed, and the amount of FEC was changed to 50 wt%, upon preparation of the electrolytic solution.

### Example 3-4

An electrolytic solution prepared in the following manner was used. Specifically, EC, FEC, DMC and LiPF₆ were mixed at a mass ratio (EC/FEC/DMC/LiPF₆) of 19.9/0.1/65/15, to which a phosphorus antioxidant (diphenyl isodecyl phosphite (DPIP)) was added in an amount of 10 ppm based on the amount of the electrolytic solution, thereby preparing the electrolytic solution. A secondary cell of Comparative Example 3-4 was produced in the same manner as in Example 1-1 except for the above.

### Example 3-5

A secondary cell of Example 3-5 was produced in the same manner as in Example 3-4 except that the amount of EC was changed to 10 wt%, and the amount of FEC was changed to 10 wt%, upon preparation of the electrolytic solution.

### Example 3-6

A secondary cell of Example 3-6 was produced in the same manner as in Example 3-4 except that EC was not mixed, and the amount of FEC was changed to 50 wt%, upon preparation of the electrolytic solution.

### Comparative Example 3-1

A secondary cell of Comparative Example 3-1 was produced in the same manner as in Example 3-1 except that MMBP was not added upon preparation of the electrolytic solution.

### Comparative Example 3-2

A secondary cell of Comparative Example 3-1 was produced in the same manner as in Example 3-1 except that EC was not mixed, the amount of DMC was changed to 35 wt%, the amount of FEC was changed to 50 wt%, and MMBP was not added, upon preparation of the electrolytic solution.

The secondary cells of Examples 3-1 to 3-6 and the secondary cells of Comparative Examples 3-1 and 3-2 were subjected to the high temperature cycle test in the same manner as in Example 1-1. The measurement results are shown in Table 3. For including Comparative Example 1-2 in evaluation, the measurement results of Comparative Example 1-2 are also shown in Table 3.

**Table 3**

| | EC (wt%) | DMC (wt%) | Halogenated carbonate ester (wt%) | | Antioxidant (ppm) | | LiPF₆ (wt%) | Discharge capacity maintenance factor (%) |
|---|---|---|---|---|---|---|---|---|
| Example 3-1 | 19.9 | 65 | FEC | 0.1 | MMBP | 10 | 15 | 78 |
| Example 3-2 | 10 | 65 | FEC | 10 | MMBP | 10 | 15 | 81 |
| Example 3-3 | - | 35 | FEC | 50 | MMBP | 10 | 15 | 77 |
| Example 3-4 | 19.9 | 65 | FEC | 0.1 | DPIP | 10 | 15 | 77 |
| Example 3-5 | 10 | 65 | FEC | 10 | DPIP | 10 | 15 | 82 |
| Example 3-6 | - | 35 | FEC | 50 | DPIP | 10 | 15 | 78 |
| Comparative Example 3-1 | 19.9 | 65 | FEC | 0.1 | - | - | 15 | 33 |
| Comparative Example 1-2 | 10 | 65 | FEC | 10 | - | - | 15 | 43 |
| Comparative Example 3-2 | - | 35 | FEC | 50 | - | - | 15 | 35 |

### Evaluation

As shown in Table 3, it was understood that the combination use of FEC and the phenol antioxidant (MMBP) or the phosphorus antioxidant (DPIP) enhanced the high temperature cycle characteristics with the phenol antioxidant (MMBP) or the phosphorus antioxidant (DPIP) even in a small content (0.01 to 5,000 ppm).

### Example 4-1

An electrolytic solution prepared in the following manner was used. Specifically, EC, FEC, DMC, LiPF₆ and succinic anhydride represented by the formula (7) were mixed at a mass ratio (EC/FEC/DMC/LiPF₆/succinic anhydride) of 9/10/65/15/1, to which 2,6-di-tert-butyl-4-cresol (BHT) was added in an amount of 10 ppm based on the amount of the electrolytic solution, thereby preparing the electrolytic solution. A secondary cell of Example 4-1 was produced in the same manner as in Example 1-1 except for the above.

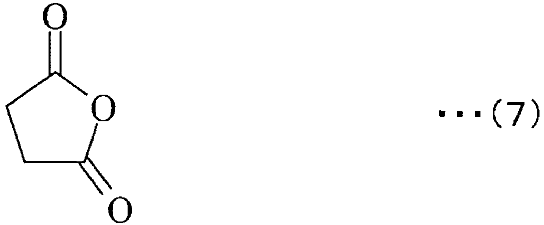

### Example 4-2

A secondary cell of Example 4-2 was produced in the same manner as in Example 4-1 except that 2-sulfobenzoic anhydride represented by the formula (8) was mixed instead of succinic anhydride represented by the formula (7) upon preparation of the electrolytic solution.

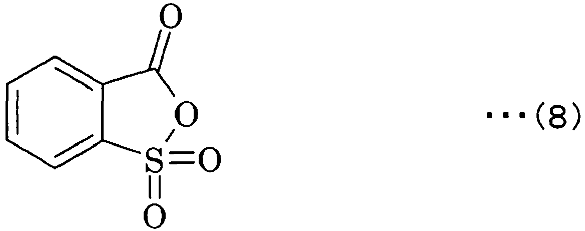

### Example 4-3

A secondary cell of Example 4-3 was produced in the same manner as in Example 4-1 except that propenesultone represented by the formula (9) was mixed instead of succinic anhydride represented by the formula (7) upon preparation of the electrolytic solution.

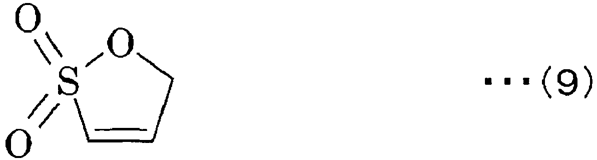

### Comparative Example 4-1

A secondary cell of Comparative Example 4-1 was produced in the same manner as in Example 4-1 except that the amount of EC was changed to 19 wt%, and FEC was not mixed, upon preparation of the electrolytic solution.

### Comparative Example 4-2

A secondary cell of Comparative Example 4-2 was produced in the same manner as in Example 4-1 except that 2,6-di-tert-butyl-4-cresol (BHT) was not added upon preparation of the electrolytic solution.

### Comparative Example 4-3

A secondary cell of Comparative Example 4-3 was produced in the same manner as in Example 4-1 except that the amount of BHT added was changed to 30,000 ppm upon preparation of the electrolytic solution.

### Comparative Example 4-4

A secondary cell of Comparative Example 4-4 was produced in the same manner as in Example 4-1 except that EC and DMC were not added, and the amount of FEC was changed to 84 wt%, upon preparation of the electrolytic solution.

### Comparative Examples 4-5 to 4-8

Secondary cells of Comparative Examples 4-5 to 4-8 were produced in the same manner as in Comparative Examples 4-1 to 4-4, respectively, except that 2-sulfobenzoic anhydride represented by the formula (8) was mixed instead of succinic anhydride represented by the formula (7) upon preparation of the electrolytic solution.

### Comparative Examples 4-9 to 4-12

Secondary cells of Comparative Examples 4-9 to 4-12 were produced in the same manner as in Comparative Examples 4-1 to 4-4, respectively, except that propenesultone represented by the formula (9) was mixed instead of succinic anhydride represented by the formula (7) upon preparation of the electrolytic solution.

The secondary cells of Examples 4-1 to 4-3 and the secondary cells of Comparative Examples 4-1 and 4-12 were subjected to the high temperature cycle test in the same manner as in Example 1-1. The measurement results are shown in Table 4.

**Table 4**

| | EC (wt%) | DMC (wt%) | Halogenated carbonate ester (wt%) | | BHT (ppm) | LiPF₆ (wt%) | Additive (wt%) | | Discharge capacity maintenance factor (%) |
|---|---|---|---|---|---|---|---|---|---|
| Example 4-1 | 9 | 65 | FEC | 10 | 10 | 15 | formula (7) | 1.0 | 83 |
| Example 4-2 | 9 | 65 | FEC | 10 | 10 | 15 | formula (8) | 1.0 | 80 |
| Example 4-3 | 9 | 65 | FEC | 10 | 10 | 15 | formula (9) | 1.0 | 81 |
| Comparative Example 4-1 | 19 | 65 | - | - | 10 | 15 | formula (7) | 1.0 | 33 |
| Comparative Example 4-2 | 9 | 65 | FEC | 10 | - | 15 | formula (7) | 1.0 | 41 |
| Comparative Example 4-3 | 9 | 65 | FEC | 10 | 30,000 | 15 | formula (7) | 1.0 | 39 |
| Comparative Example 4-4 | - | - | FEC | 84 | 10 | 15 | formula (7) | 1.0 | 31 |
| Comparative Example 4-5 | 19 | 65 | - | - | 10 | 15 | formula (8) | 1.0 | 32 |
| Comparative Example 4-6 | 9 | 65 | FEC | 10 | - | 15 | formula (8) | 1.0 | 42 |
| Comparative Example 4-7 | 9 | 65 | FEC | 10 | 30,000 | 15 | formula (8) | 1.0 | 37 |
| Comparative Example 4-8 | - | - | FEC | 84 | 10 | 15 | formula (8) | 1.0 | 29 |
| Comparative Example 4-9 | 19 | 65 | - | - | 10 | 15 | formula (9) | 1.0 | 30 |
| Comparative Example 4-10 | 9 | 65 | FEC | 10 | - | 15 | formula (9) | 1.0 | 42 |
| Comparative Example 4-11 | 9 | 65 | FEC | 10 | 30,000 | 15 | formula (9) | 1.0 | 39 |
| Comparative Example 4-12 | - | - | FEC | 84 | 10 | 15 | formula (9) | 1.0 | 29 |

### Evaluation

As shown in Table 4, it was understood that the combination use of FEC and the phenol antioxidant (BHT), to which succinic anhydride represented by the formula (7), 2-sulfobenzoic anhydride represented by the formula (8) or propenesultone represented by the formula (9) was added, similarly enhanced the high temperature cycle characteristics with the phenol antioxidant (BHT) even in a small content (0.01 to 5,000 ppm).

### Examples 5-1 to 5-7

Secondary cells of Examples 5-1 to 5-7 were produced in the same manner as in Examples 1-15 to 1-21, respectively, except that 4,5-difluoro-1,3-dioxolan-2-one (DFEC) was mixed instead of FEC upon preparation of the electrolytic solution.

### Examples 5-8 to 5-14

Secondary cells of Examples 5-8 to 5-14 were produced in the same manner as in Examples 1-15 to 1-21, respectively, except that fluoromethyl carbonate (FDMC) was mixed instead of FEC upon preparation of the electrolytic solution.

### Examples 5-15 to 5-21

Secondary cells of Examples 5-15 to 5-21 were produced in the same manner as in Examples 1-15 to 1-21, respectively, except that bis(fluoromethyl) carbonate (DFDMC) was mixed instead of FEC upon preparation of the electrolytic solution.

### Examples 5-22 to 5-28

Secondary cells of Examples 5-22 to 5-28 were produced in the same manner as in Examples 1-15 to 1-21, respectively, except that 4-chloro-1,3-dioxolan-2-one (CEC) was mixed instead of FEC upon preparation of the electrolytic solution.

### Comparative Example 5-1

A secondary cell of Comparative Example 5-1 was produced in the same manner as in Example 5-1 except that BHT was not added upon preparation of the electrolytic solution.

### Comparative Example 5-2

A secondary cell of Comparative Example 5-1 was produced in the same manner as in Example 5-1 except that the amount of BHT added was changed to 30,000 ppm upon preparation of the electrolytic solution.

### Comparative Example 5-3

A secondary cell of Comparative Example 5-3 was produced in the same manner as in Example 5-8 except that BHT was not added upon preparation of the electrolytic solution.

### Comparative Example 5-4

A secondary cell of Comparative Example 5-4 was produced in the same manner as in Example 5-8 except that the amount of BHT added was changed to 30,000 ppm upon preparation of the electrolytic solution.

### Comparative Example 5-5

A secondary cell of Comparative Example 5-5 was produced in the same manner as in Example 5-15 except that BHT was not added upon preparation of the electrolytic solution.

### Comparative Example 5-6

A secondary cell of Comparative Example 5-6 was produced in the same manner as in Example 5-15 except that the amount of BHT added was changed to 30,000 ppm upon preparation of the electrolytic solution.

### Comparative Example 5-7

A secondary cell of Comparative Example 5-6 was produced in the same manner as in Example 5-22 except that BHT was not added upon preparation of the electrolytic solution.

### Comparative Example 5-8

A secondary cell of Comparative Example 5-8 was produced in the same manner as in Example 5-22 except that the amount of BHT added was changed to 30,000 ppm upon preparation of the electrolytic solution.

The secondary cells of Examples 5-1 to 5-28 and the secondary cells of Comparative Examples 5-1 to 5-8 were subjected to the high temperature cycle test in the same manner as in Example 1-1. The measurement results are shown in Table 5. For including Comparative Examples 1-1 and 1-4 in evaluation, the measurement results of Comparative Examples 1-1 and 1-4 are also shown in Table 5.

**Table 5**

| | EC (wt%) | DMC (wt%) | Halogenated carbonate ester (wt%) | | BHT (ppm) | LiPF₆ (wt%) | Discharge capacity maintenance factor (%) |
|---|---|---|---|---|---|---|---|
| Example 5-1 | 10 | 65 | DFEC | 10 | 0.01 | 15 | 52 |
| Example 5-2 | 10 | 65 | DFEC | 10 | 0.1 | 15 | 57 |
| Example 5-3 | 10 | 65 | DFEC | 10 | 1 | 15 | 84 |
| Example 5-4 | 10 | 65 | DFEC | 10 | 10 | 15 | 86 |
| Example 5-5 | 10 | 65 | DFEC | 10 | 1,000 | 15 | 83 |
| Example 5-6 | 10 | 65 | DFEC | 10 | 2,000 | 15 | 59 |
| Example 5-7 | 10 | 65 | DFEC | 10 | 5,000 | 15 | 55 |
| Example 5-8 | 10 | 65 | FDMC | 10 | 0.01 | 15 | 49 |
| Example 5-9 | 10 | 65 | FDMC | 10 | 0.1 | 15 | 55 |
| Example 5-10 | 10 | 65 | FDMC | 10 | 1 | 15 | 79 |
| Example 5-11 | 10 | 65 | FDMC | 10 | 10 | 15 | 81 |
| Example 5-12 | 10 | 65 | FDMC | 10 | 1,000 | 15 | 77 |
| Example 5-13 | 10 | 65 | FDMC | 10 | 2,000 | 15 | 58 |
| Example 5-14 | 10 | 65 | FDMC | 10 | 5,000 | 15 | 53 |
| Example 5-15 | 10 | 65 | DFDMC | 10 | 0.01 | 15 | 50 |
| Example 5-16 | 10 | 65 | DFDMC | 10 | 0.1 | 15 | 55 |
| Example 5-17 | 10 | 65 | DFDMC | 10 | 1 | 15 | 80 |
| Example 5-18 | 10 | 65 | DFDMC | 10 | 10 | 15 | 82 |
| Example 5-19 | 10 | 65 | DFDMC | 10 | 1,000 | 15 | 79 |
| Example 5-20 | 10 | 65 | DFDMC | 10 | 2,000 | 15 | 58 |
| Example 5-21 | 10 | 65 | DFDMC | 10 | 5,000 | 15 | 54 |
| Example 5-22 | 10 | 65 | CEC | 10 | 0.01 | 15 | 48 |
| Example 5-23 | 10 | 65 | CEC | 10 | 0.1 | 15 | 52 |
| Example 5-24 | 10 | 65 | CEC | 10 | 1 | 15 | 78 |
| Example 5-25 | 10 | 65 | CEC | 10 | 10 | 15 | 80 |
| Example 5-26 | 10 | 65 | CEC | 10 | 1,000 | 15 | 79 |
| Example 5-27 | 10 | 65 | CEC | 10 | 2,000 | 15 | 59 |
| Example 5-28 | 10 | 65 | CEC | 10 | 5,000 | 15 | 54 |

| | EC (wt%) | DMC (wt%) | Halogenated carbonate ester (wt%) | | TBP (ppm) | LiPF₆ (wt%) | Discharge capacity maintenance factor (%) |
|---|---|---|---|---|---|---|---|
| Comparative Example 1-1 | 20 | 65 | - | - | - | 15 | 32 |
| Comparative Example 1-4 | 20 | 65 | - | - | 10 | 15 | 35 |
| Comparative Example 5-1 | 10 | 65 | DFEC | 10 | - | 15 | 43 |
| Comparative Example 5-2 | 10 | 65 | DFEC | 10 | 30,000 | 15 | 38 |
| Comparative Example 5-3 | 10 | 65 | FDMC | 10 | - | 15 | 42 |
| Comparative Example 5-4 | 10 | 65 | FDMC | 10 | 30,000 | 15 | 39 |
| Comparative Example 5-5 | 10 | 65 | DFDMC | 10 | - | 15 | 42 |
| Comparative Example 5-6 | 10 | 65 | DFDMC | 10 | 30,000 | 15 | 37 |
| Comparative Example 5-7 | 10 | 65 | CEC | 10 | - | 15 | 42 |
| Comparative Example 5-8 | 10 | 65 | CEC | 10 | 30,000 | 15 | 37 |

### Evaluation

As shown in Table 5, it was understood that the combination use of DFEC, FDMC, DFDMC or CEC and the phenol antioxidant (BHT) similarly enhanced the high temperature cycle characteristics with the phenol antioxidant (BHT) even in a small content (0.01 to 5,000 ppm). According to Examples 5-1 to 5-28, it was understood that further enhanced high temperature cycle characteristics were obtained when the content of the phenol antioxidant (BHT) was from 1 to 1,000 ppm.

### Examples 6-1 to 6-7

A negative electrode 22 was produced in the following manner. Specifically, negative electrode active substance layers 22B formed of silicon were formed by the electron beam vapor deposition method on both surfaces of a negative electrode collector 22A formed of a copper foil (thickness: 15 µm), thereby producing the negative electrode 22. Thereafter, a negative electrode lead 26 formed of nickel was attached to one end of the negative electrode collector 22A. Secondary cells of Examples 6-1 to 6-7 were produced in the same manner as in Examples 1-8 to 1-14, respectively, except for the above.

### Examples 6-8 to 6-14

Secondary cells of Examples 6-8 to 6-14 were produced in the same manner as in Examples 6-1 to 6-7, respectively, except that the amount of EC was changed to 10 wt%, and the amount of FEC was changed to 10 wt%, upon preparation of the electrolytic solution.

### Examples 6-15 to 6-21

Secondary cells of Examples 6-15 to 6-21 were produced in the same manner as in Examples 6-1 to 6-7, respectively, except that the amount of EC was changed to 10 wt%, and 10 wt% of DFEC was mixed instead of FEC, upon preparation of the electrolytic solution.

### Examples 6-22 to 6-28

Secondary cells of Examples 6-22 to 6-28 were produced in the same manner as in Examples 6-1 to 6-7, respectively, except that the amount of EC was changed to 10 wt%, and 10 wt% of FDMC was mixed instead of FEC, upon preparation of the electrolytic solution.

### Examples 6-29 to 6-35

Secondary cells of Examples 6-29 to 6-35 were produced in the same manner as in Examples 6-1 to 6-7, respectively, except that the amount of EC was changed to 10 wt%, and 10 wt% of DFDMC was mixed instead of FEC, upon preparation of the electrolytic solution.

### Examples 6-36 to 6-42

Secondary cells of Examples 6-36 to 6-42 were produced in the same manner as in Examples 6-1 to 6-7, respectively, except that the amount of EC was changed to 10 wt%, and 10 wt% of CEC was mixed instead of FEC, upon preparation of the electrolytic solution.

### Comparative Example 6-1

A secondary cell of Comparative Example 6-1 was produced in the same manner as in Example 6-1 except that the amount of EC was changed to 20 wt%, FEC was not mixed, and BHT was not added, upon preparation of the electrolytic solution.

### Comparative Example 6-2

A secondary cell of Comparative Example 6-2 was produced in the same manner as in Example 6-1 except that the amount of EC was changed to 20 wt%, FEC was not mixed, and the amount of BHT added was changed to 10 ppm, upon preparation of the electrolytic solution.

### Comparative Example 6-3

A secondary cell of Comparative Example 6-3 was produced in the same manner as in Example 6-8 except that BHT was not added, upon preparation of the electrolytic solution.

### Comparative Example 6-4

A secondary cell of Comparative Example 6-4 was produced in the same manner as in Example 6-8 except that the amount of BHT added was changed to 30,000 ppm, upon preparation of the electrolytic solution.

### Comparative Example 6-5

A secondary cell of Comparative Example 6-5 was produced in the same manner as in Example 6-8 except that EC and DMC were not mixed, the amount of FEC was changed to 85 wt%, and the amount of BHT added was changed to 10 ppm, upon preparation of the electrolytic solution.

### Comparative Examples 6-6 and 6-7

Secondary cells of Comparative Examples 6-6 and 6-7 were produced in the same manner as in Comparative Examples 6-3 and 6-4, respectively, except that DFEC was mixed instead of FEC upon preparation of the electrolytic solution.

### Comparative Examples 6-8 and 6-9

Secondary cells of Comparative Examples 6-8 and 6-9 were produced in the same manner as in Comparative Examples 6-3 and 6-4, respectively, except that FDMC was mixed instead of FEC upon preparation of the electrolytic solution.

### Comparative Examples 6-10 and 6-11

Secondary cells of Comparative Examples 6-10 and 6-11 were produced in the same manner as in Comparative Examples 6-3 and 6-4, respectively, except that DFDMC was mixed instead of FEC upon preparation of the electrolytic solution.

### Comparative Examples 6-12 and 6-13

Secondary cells of Comparative Examples 6-12 and 6-13 were produced in the same manner as in Comparative Examples 6-3 and 6-4, respectively, except that CEC was mixed instead of FEC upon preparation of the electrolytic solution.

### Comparative Example 6-14

An electrolytic solution prepared in the following manner was used. Specifically, EC, vinylene carbonate (VC), dimethyl carbonate (DMC) and LiPF₆ were mixed at a mass ratio (EC/VC/DMC/LiPF₆) of 10/10/65/15, thereby preparing the electrolytic solution. BHT was not added to the electrolytic solution. A secondary cell of Comparative Example 6-14 was produced in the same manner as in Example 6-1 except for the above.

### Comparative Example 6-15

A secondary cell of Comparative Example 6-15 was produced in the same manner as in Comparative Example 6-14 except that BHT was added in an amount of 1 ppm upon preparation of the electrolytic solution.

### Comparative Example 6-16

A secondary cell of Comparative Example 6-16 was produced in the same manner as in Comparative Example 6-14 except that BHT was added in an amount of 10 ppm upon preparation of the electrolytic solution.

### Comparative Example 6-17

A secondary cell of Comparative Example 6-17 was produced in the same manner as in Comparative Example 6-14 except that BHT was added in an amount of 1,000 ppm upon preparation of the electrolytic solution.

### Comparative Example 6-18

A secondary cell of Comparative Example 6-18 was produced in the same manner as in Comparative Example 6-14 except that BHT was added in an amount of 30,000 ppm upon preparation of the electrolytic solution.

The secondary cells of Examples 6-1 to 6-42 and the secondary cells of Comparative Examples 6-1 to 6-18 were subjected to the high temperature cycle test in the same manner as in Example 1-1. The measurement results are shown in Table 6.

**Table 6**

| | EC (wt%) | DMC (wt%) | Halogenated carbonate ester (wt%) | | BHT (ppm) | LiPF₆ (wt%) | Discharge capacity maintenance factor (%) |
|---|---|---|---|---|---|---|---|
| Example 6-1 | 19 | 65 | FEC | 1 | 0.01 | 15 | 49 |
| Example 6-2 | 19 | 65 | FEC | 1 | 0.1 | 15 | 55 |
| Example 6-3 | 19 | 65 | FEC | 1 | 1 | 15 | 76 |
| Example 6-4 | 19 | 65 | FEC | 1 | 10 | 15 | 78 |
| Example 6-5 | 19 | 65 | FEC | 1 | 1,000 | 15 | 76 |
| Example 6-6 | 19 | 65 | FEC | 1 | 2,000 | 15 | 54 |
| Example 6-7 | 19 | 65 | FEC | 1 | 5,000 | 15 | 51 |
| Example 6-8 | 10 | 65 | FEC | 10 | 0.01 | 15 | 51 |
| Example 6-9 | 10 | 65 | FEC | 10 | 0.1 | 15 | 59 |
| Example 6-10 | 10 | 65 | FEC | 10 | 1 | 15 | 80 |
| Example 6-11 | 10 | 65 | FEC | 10 | 10 | 15 | 83 |
| Example 6-12 | 10 | 65 | FEC | 10 | 1,000 | 15 | 79 |
| Example 6-13 | 10 | 65 | FEC | 10 | 2,000 | 15 | 58 |
| Example 6-14 | 10 | 65 | FEC | 10 | 5,000 | 15 | 57 |
| Example 6-15 | 10 | 65 | DFEC | 10 | 0.01 | 15 | 52 |
| Example 6-16 | 10 | 65 | DFEC | 10 | 0.1 | 15 | 58 |
| Example 6-17 | 10 | 65 | DFEC | 10 | 1 | 15 | 81 |
| Example 6-18 | 10 | 65 | DFEC | 10 | 10 | 15 | 85 |
| Example 6-19 | 10 | 65 | DFEC | 10 | 1,000 | 15 | 82 |
| Example 6-20 | 10 | 65 | DFEC | 10 | 2,000 | 15 | 59 |
| Example 6-21 | 10 | 65 | DFEC | 10 | 5,000 | 15 | 54 |
| Example 6-22 | 10 | 65 | FDMC | 10 | 0.01 | 15 | 51 |
| Example 6-23 | 10 | 65 | FDMC | 10 | 0.1 | 15 | 56 |
| Example 6-24 | 10 | 65 | FDMC | 10 | 1 | 15 | 77 |
| Example 6-25 | 10 | 65 | FDMC | 10 | 10 | 15 | 81 |
| Example 6-26 | 10 | 65 | FDMC | 10 | 1,000 | 15 | 77 |
| Example 6-27 | 10 | 65 | FDMC | 10 | 2,000 | 15 | 58 |
| Example 6-28 | 10 | 65 | FDMC | 10 | 5,000 | 15 | 54 |
| Example 6-29 | 10 | 65 | DFDMC | 10 | 0.01 | 15 | 49 |
| Example 6-30 | 10 | 65 | DFDMC | 10 | 0.1 | 15 | 54 |
| Example 6-31 | 10 | 65 | DFDMC | 10 | 1 | 15 | 79 |
| Example 6-32 | 10 | 65 | DFDMC | 10 | 10 | 15 | 81 |
| Example 6-33 | 10 | 65 | DFDMC | 10 | 1,000 | 15 | 78 |
| Example 6-34 | 10 | 65 | DFDMC | 10 | 2,000 | 15 | 61 |
| Example 6-35 | 10 | 65 | DFDMC | 10 | 5,000 | 15 | 56 |
| Example 6-36 | 10 | 65 | CEC | 10 | 0.01 | 15 | 47 |
| Example 6-37 | 10 | 65 | CEC | 10 | 0.1 | 15 | 52 |
| Example 6-38 | 10 | 65 | CEC | 10 | 1 | 15 | 78 |
| Example 6-39 | 10 | 65 | CEC | 10 | 10 | 15 | 80 |
| Example 6-40 | 10 | 65 | CEC | 10 | 1,000 | 15 | 79 |
| Example 6-41 | 10 | 65 | CEC | 10 | 2,000 | 15 | 62 |
| Example 6-42 | 10 | 65 | CEC | 10 | 5,000 | 15 | 56 |
| Comparative Example 6-1 | 20 | 65 | - | - | - | 15 | 22 |
| Comparative Example 6-2 | 20 | 65 | - | - | 10 | 15 | 24 |
| Comparative Example 6-3 | 10 | 65 | FEC | 10 | - | 15 | 29 |
| Comparative Example 6-4 | 10 | 65 | FEC | 10 | 30,000 | 15 | 28 |
| Comparative Example 6-5 | - | - | FEC | 85 | 10 | 15 | 20 |
| Comparative Example 6-6 | 10 | 65 | DFEC | 10 | - | 15 | 28 |
| Comparative Example 6-7 | 10 | 65 | DFEC | 10 | 30,000 | 15 | 29 |
| Comparative Example 6-8 | 10 | 65 | FDMC | 10 | - | 15 | 29 |
| Comparative Example 6-9 | 10 | 65 | FDMC | 10 | 30,000 | 15 | 26 |
| Comparative Example 6-10 | 10 | 65 | DFDMC | 10 | - | 15 | 28 |
| Comparative Example 6-11 | 10 | 65 | DFDMC | 10 | 30,000 | 15 | 27 |
| Comparative Example 6-12 | 10 | 65 | CEC | 10 | - | 15 | 26 |
| Comparative Example 6-13 | 10 | 65 | CEC | 10 | 30,000 | 15 | 25 |

| | EC (wt%) | DMC (wt%) | VC (wt%) | BHT (ppm) | LiPF₆ (wt%) | Discharge capacity maintenance factor (%) | |
|---|---|---|---|---|---|---|---|
| Comparative Example 6-14 | 10 | 65 | 10 | - | 15 | 30 | |
| Comparative Example 6-15 | 10 | 65 | 10 | 1 | 15 | 28 | |
| Comparative Example 6-16 | 10 | 65 | 10 | 10 | 15 | 28 | |
| Comparative Example 6-17 | 10 | 65 | 10 | 1,000 | 15 | 31 | |
| Comparative Example 6-18 | 10 | 65 | 10 | 30, 000 | 15 | 41 | |

### Evaluation

As shown in Table 6, it was understood that in the case where silicon was used as the negative electrode active substance, the combination use of FEC and the phenol antioxidant (BHT) enhanced the high temperature cycle characteristics with the phenol antioxidant (BHT) even in a small content (0.01 to 5,000 ppm). According to Examples 6-1 to 6-42, it was understood that further enhanced high temperature cycle characteristics were obtained when the content of the phenol antioxidant (BHT) was from 1 to 1,000 ppm.

### Examples 7-1 to 7-7

A negative electrode 22 was produced in the following manner. Specifically, tin-cobalt-indium-titanium alloy powder and carbon powder were mixed, and an SnCoC-containing material was synthesized by utilizing mechanochemical reaction. The analysis of the composition of the SnCoC-containing material revealed that the content of tin was 48 wt%, the content of cobalt was 23 wt%, the content of carbon was 20 wt%, and the ratio of cobalt to the total of tin and cobalt (Co/(Sn+Co)) was 32 wt%.

Subsequently, 80 parts by mass of the SnCoC-containing material powder as a negative electrode active substance, 12 parts by mass of graphite as an electroconductive agent and 8 parts by mass of polyvinilidene fluoride as a binder were mixed and dispersed in N-methyl-2-pyrrolidone as a solvent. Finally, the composition was coated and dried on both surfaces of a negative electrode collector 22A formed of a copper foil (thickness: 15 µm), and then molded by compressing, thereby forming negative electrode active substance layers 22B. Secondary cells of Examples 7-1 to 7-7 were produced in the same manner as in Examples 6-1 to 6-7, respectively, except for the above.

### Examples 7-8 to 7-14

Secondary cells of Examples 7-8 to 7-14 were produced in the same manner as in Examples 7-1 to 7-7, respectively, except that the amount of EC was changed to 10 wt%, and the amount of FEC was changed to 10 wt%, upon preparation of the electrolytic solution.

### Examples 7-15 to 7-21

Secondary cells of Examples 7-15 to 7-21 were produced in the same manner as in Examples 7-1 to 7-7, respectively, except that the amount of EC was changed to 10 wt%, and 10 wt% of DFEC was mixed instead of FEC, upon preparation of the electrolytic solution.

### Examples 7-22 to 7-28

Secondary cells of Examples 7-22 to 7-28 were produced in the same manner as in Examples 7-1 to 7-7, respectively, except that the amount of EC was changed to 10 wt%, and 10 wt% of FDMC was mixed instead of FEC, upon preparation of the electrolytic solution.

### Examples 7-29 to 7-35

Secondary cells of Examples 7-29 to 7-35 were produced in the same manner as in Examples 7-1 to 7-7, respectively, except that the amount of EC was changed to 10 wt%, and 10 wt% of DFDMC was mixed instead of FEC, upon preparation of the electrolytic solution.

### Examples 7-36 to 7-42

Secondary cells of Examples 7-36 to 7-42 were produced in the same manner as in Examples 7-1 to 7-7, respectively, except that the amount of EC was changed to 10 wt%, and 10 wt% of CEC was mixed instead of FEC, upon preparation of the electrolytic solution.

### Comparative Example 7-1

A secondary cell of Comparative Example 7-1 was produced in the same manner as in Example 7-1 except that the amount of EC was changed to 20 wt%, FEC was not mixed, and BHT was not added, upon preparation of the electrolytic solution.

### Comparative Example 7-2

A secondary cell of Comparative Example 7-2 was produced in the same manner as in Example 7-1 except that the amount of EC was changed to 20 wt%, FEC was not mixed, and the amount of BHT added was changed to 10 ppm, upon preparation of the electrolytic solution.

### Comparative Example 7-3

A secondary cell of Comparative Example 7-3 was produced in the same manner as in Example 7-8 except that BHT was not added, upon preparation of the electrolytic solution.

### Comparative Example 7-4

A secondary cell of Comparative Example 7-4 was produced in the same manner as in Example 7-8 except that the amount of BHT added was changed to 30,000 ppm, upon preparation of the electrolytic solution.

### Comparative Example 7-5

A secondary cell of Comparative Example 7-5 was produced in the same manner as in Example 7-8 except that EC and DMC were not mixed, the amount of FEC was changed to 85 wt%, and the amount of BHT added was changed to 10 ppm, upon preparation of the electrolytic solution.

### Comparative Examples 7-6 and 7-7

Secondary cells of Comparative Examples 7-6 and 7-7 were produced in the same manner as in Comparative Examples 7-3 and 7-4, respectively, except that DFEC was mixed instead of FEC upon preparation of the electrolytic solution.

### Comparative Examples 7-8 and 7-9

Secondary cells of Comparative Examples 7-8 and 7-9 were produced in the same manner as in Comparative Examples 7-3 and 7-4, respectively, except that FDMC was mixed instead of FEC upon preparation of the electrolytic solution.

### Comparative Examples 7-10 and 7-11

Secondary cells of Comparative Examples 7-10 and 7-11 were produced in the same manner as in Comparative Examples 7-3 and 7-4, respectively, except that DFDMC was mixed instead of FEC upon preparation of the electrolytic solution.

### Comparative Examples 7-12 and 7-13

Secondary cells of Comparative Examples 7-12 and 7-13 were produced in the same manner as in Comparative Examples 7-3 and 7-4, respectively, except that CEC was mixed instead of FEC upon preparation of the electrolytic solution.

### Comparative Example 7-14

An electrolytic solution prepared in the following manner was used. Specifically, EC, vinylene carbonate (VC), dimethyl carbonate (DMC) and LiPF₆ were mixed at a mass ratio (EC/VC/DMC/LiPF₆) of 10/10/65/15, thereby preparing the electrolytic solution. BHT was not added to the electrolytic solution. A secondary cell of Comparative Example 7-14 was produced in the same manner as in Example 7-1 except for the above.

### Comparative Example 7-15

A secondary cell of Comparative Example 7-15 was produced in the same manner as in Comparative Example 7-14 except that BHT was added in an amount of 1 ppm upon preparation of the electrolytic solution.

### Comparative Example 7-16

A secondary cell of Comparative Example 7-16 was produced in the same manner as in Comparative Example 7-14 except that BHT was added in an amount of 10 ppm upon preparation of the electrolytic solution.

### Comparative Example 7-17

A secondary cell of Comparative Example 7-17 was produced in the same manner as in Comparative Example 7-14 except that BHT was added in an amount of 1,000 ppm upon preparation of the electrolytic solution.

### Comparative Example 7-18

A secondary cell of Comparative Example 7-18 was produced in the same manner as in Comparative Example 7-14 except that BHT was added in an amount of 30,000 ppm upon preparation of the electrolytic solution.

The secondary cells of Examples 7-1 to 7-42 and the secondary cells of Comparative Examples 7-1 to 7-18 were subjected to the high temperature cycle test in the same manner as in Example 1-1. The measurement results are shown in Table 7.

**Table 7**

| | EC (wt%) | DMC (wt%) | Halogenated carbonate ester (wt%) | | BHT (ppm) | LiPF₆ (wt%) | Discharge capacity maintenance factor (%) |
|---|---|---|---|---|---|---|---|
| Example 7-1 | 19 | 65 | FEC | 1 | 0.01 | 15 | 50 |
| Example 7-2 | 19 | 65 | FEC | 1 | 0.1 | 15 | 56 |
| Example 7-3 | 19 | 65 | FEC | 1 | 1 | 15 | 79 |
| Example 7-4 | 19 | 65 | FEC | 1 | 10 | 15 | 82 |
| Example 7-5 | 19 | 65 | FEC | 1 | 1,000 | 15 | 78 |
| Example 7-6 | 19 | 65 | FEC | 1 | 2,000 | 15 | 60 |
| Example 7-7 | 19 | 65 | FEC | 1 | 5,000 | 15 | 55 |
| Example 7-8 | 10 | 65 | FEC | 10 | 0.01 | 15 | 51 |
| Example 7-9 | 10 | 65 | FEC | 10 | 0.1 | 15 | 58 |
| Example 7-10 | 10 | 65 | FEC | 10 | 1 | 15 | 82 |
| Example 7-11 | 10 | 65 | FEC | 10 | 10 | 15 | 84 |
| Example 7-12 | 10 | 65 | FEC | 10 | 1,000 | 15 | 83 |
| Example 7-13 | 10 | 65 | FEC | 10 | 2,000 | 15 | 64 |
| Example 7-14 | 10 | 65 | FEC | 10 | 5,000 | 15 | 62 |
| Example 7-15 | 10 | 65 | DFEC | 10 | 0.01 | 15 | 53 |
| Example 7-16 | 10 | 65 | DFEC | 10 | 0.1 | 15 | 59 |
| Example 7-17 | 10 | 65 | DFEC | 10 | 1 | 15 | 83 |
| Example 7-18 | 10 | 65 | DFEC | 10 | 10 | 15 | 85 |
| Example 7-19 | 10 | 65 | DFEC | 10 | 1,000 | 15 | 84 |
| Example 7-20 | 10 | 65 | DFEC | 10 | 2,000 | 15 | 62 |
| Example 7-21 | 10 | 65 | DFEC | 10 | 5,000 | 15 | 59 |
| Example 7-22 | 10 | 65 | FDMC | 10 | 0.01 | 15 | 47 |
| Example 7-23 | 10 | 65 | FDMC | 10 | 0.1 | 15 | 52 |
| Example 7-24 | 10 | 65 | FDMC | 10 | 1 | 15 | 78 |
| Example 7-25 | 10 | 65 | FDMC | 10 | 10 | 15 | 80 |
| Example 7-26 | 10 | 65 | FDMC | 10 | 1,000 | 15 | 77 |
| Example 7-27 | 10 | 65 | FDMC | 10 | 2,000 | 15 | 56 |
| Example 7-28 | 10 | 65 | FDMC | 10 | 5,000 | 15 | 51 |
| Example 7-29 | 10 | 65 | DFDMC | 10 | 0.01 | 15 | 51 |
| Example 7-30 | 10 | 65 | DFDMC | 10 | 0.1 | 15 | 54 |
| Example 7-31 | 10 | 65 | DFDMC | 10 | 1 | 15 | 79 |
| Example 7-32 | 10 | 65 | DFDMC | 10 | 10 | 15 | 81 |
| Example 7-33 | 10 | 65 | DFDMC | 10 | 1,000 | 15 | 79 |
| Example 7-34 | 10 | 65 | DFDMC | 10 | 2,000 | 15 | 58 |
| Example 7-35 | 10 | 65 | DFDMC | 10 | 5,000 | 15 | 56 |
| Example 7-36 | 10 | 65 | CEC | 10 | 0.01 | 15 | 45 |
| Example 7-37 | 10 | 65 | CEC | 10 | 0.1 | 15 | 50 |
| Example 7-38 | 10 | 65 | CEC | 10 | 1 | 15 | 79 |
| Example 7-39 | 10 | 65 | CEC | 10 | 10 | 15 | 82 |
| Example 7-40 | 10 | 65 | CEC | 10 | 1,000 | 15 | 79 |
| Example 7-41 | 10 | 65 | CEC | 10 | 2,000 | 15 | 58 |
| Example 7-42 | 10 | 65 | CEC | 10 | 5,000 | 15 | 54 |
| Comparative Example 7-1 | 20 | 65 | - | - | - | 15 | 26 |
| Comparative Example 7-2 | 20 | 65 | - | - | 10 | 15 | 29 |
| Comparative Example 7-3 | 10 | 65 | FEC | 10 | - | 15 | 35 |
| Comparative Example 7-4 | 10 | 65 | FEC | 10 | 30,000 | 15 | 35 |
| Comparative Example 7-5 | - | - | FEC | 85 | 10 | 15 | 25 |
| Comparative Example 7-6 | 10 | 65 | DFEC | 10 | - | 15 | 37 |
| Comparative Example 7-7 | 10 | 65 | DFEC | 10 | 30,000 | 15 | 36 |
| Comparative Example 7-8 | 10 | 65 | FDMC | 10 | - | 15 | 36 |
| Comparative Example 7-9 | 10 | 65 | FDMC | 10 | 30,000 | 15 | 34 |
| Comparative Example 7-10 | 10 | 65 | DFDMC | 10 | - | 15 | 36 |
| Comparative Example 7-11 | 10 | 65 | DFDMC | 10 | 30,000 | 15 | 37 |
| Comparative Example 7-12 | 10 | 65 | CEC | 10 | - | 15 | 35 |
| Comparative Example 7-13 | 10 | 65 | CEC | 10 | 30,000 | 15 | 33 |

| | EC (wt%) | DMC (wt%) | VC (wt%) | BHT (ppm) | LiPF₆ (wt%) | Discharge capacity maintenance factor (%) | |
|---|---|---|---|---|---|---|---|
| Comparative Example 7-14 | 10 | 65 | 10 | - | 15 | 34 | |
| Comparative Example 7-15 | 10 | 65 | 10 | 1 | 15 | 31 | |
| Comparative Example 7-16 | 10 | 65 | 10 | 10 | 15 | 32 | |
| Comparative Example 7-17 | 10 | 65 | 10 | 1,000 | 15 | 32 | |
| Comparative Example 7-18 | 10 | 65 | 10 | 30,000 | 15 | 48 | |

### Evaluation

As shown in Table 7, it was understood that in the case where the SnCoC-containing material was used as the negative electrode active substance, the combination use of FEC and the phenol antioxidant (BHT) enhanced the high temperature cycle characteristics with the phenol antioxidant (BHT) even in a small content (0.01 to 5,000 ppm). According to Examples 7-1 to 7-42, it was understood that further enhanced high temperature cycle characteristics were obtained when the content of the phenol antioxidant (BHT) was from 1 to 1,000 ppm.

### 5. Other Embodiments

The invention is not limited to the aforementioned embodiments of the invention, and various modifications and applications may be applied thereto within the range where they do not depart from the gist of the invention. For example, while the second to fourth embodiments describe cylinder type and planar type (laminated type) secondary cells, the invention may be similarly applied to button type, thin type, large type and stacked type secondary cells.

For example, while the second to fourth embodiments describe a so-called lithium ion secondary cell where the capacity of the negative electrode is shown by the capacity component based on occlusion and release of lithium, but the invention is not limited thereto. For example, the invention may be similarly applied to a so-called lithium metal secondary cell where lithium metal is used as a negative electrode active substance and the capacity of the negative electrode is shown by the capacity component based on deposition and dissolution of lithium. The invention may also be similarly applied to a secondary cell, in which the charging capacity of the negative electrode material capable of occluding and releasing lithium is made smaller than the charging capacity of the positive electrode, whereby the capacity of the negative electrode includes the capacity component based on occlusion and release of lithium and the capacity component based on deposition and dissolution of lithium, and is shown by the sum of them.

### Description of Symbols

- 11: cell canister
- 12, 13: insulating plate
- 14: cell lid
- 15A: disk plate
- 15: safety valve mechanism
- 16: thermosensitive resistance device
- 17: gasket
- 20: wound electrode assembly
- 21: positive electrode
- 21A: positive electrode collector
- 21B: positive electrode active substance layer
- 22: negative electrode
- 22A: negative electrode collector
- 22B: negative electrode active substance layer
- 23: separator
- 24: center pin
- 25: positive electrode lead
- 26: negative electrode lead
- 27: gasket
- 30: wound electrode assembly
- 31: positive electrode lead
- 32: negative electrode lead
- 33: positive electrode
- 33A: positive electrode collector
- 33B: positive electrode active substance layer
- 34: negative electrode
- 34A: negative electrode collector
- 34B: negative electrode active substance layer
- 35: separator
- 36: electrolyte
- 37: protective tape
- 40: exterior member
- 41: adhesive film

## Claims

1. A nonaqueous electrolyte comprising:
a solvent,
an electrolyte salt and
an antioxidant,
the solvent containing a halogenated carbonate ester represented by the formula (1) or (2),
a content of the halogenated carbonate ester being from 0.1 to 50% by mass, and
a content of the antioxidant being from 0.01 to 5,000 ppm: 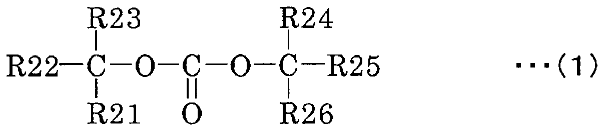 wherein R21 to R26 each independently represent a hydrogen group, a halogen group, an alkyl group or a halogenated alkyl group, provided that at least one of R21 to R26 represents a halogen group or a halogenated alkyl group, 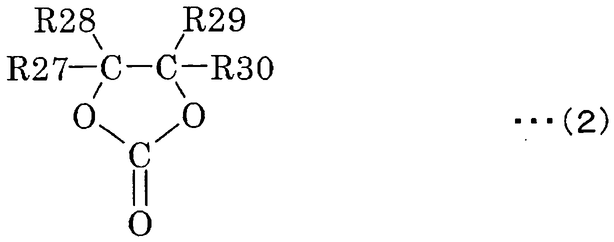 wherein R27 to R30 each independently represent a hydrogen group, a halogen group, an alkyl group or a halogenated alkyl group, provided that at least one of R27 to R30 represents a halogen group or a halogenated alkyl group.

2. The nonaqueous electrolyte according to claim 1, wherein the content of the antioxidant is from 0.1 to 1,000 ppm.

3. The nonaqueous electrolyte according to claim 1, wherein
the antioxidant is at least one selected from the group consisting of a phenol antioxidant, a phosphorus antioxidant, a sulfur antioxidant and an amine antioxidant.

4. The nonaqueous electrolyte according to claim 3, wherein
the phenol antioxidant is a compound having a structure represented by the formula (3) in the molecule thereof: 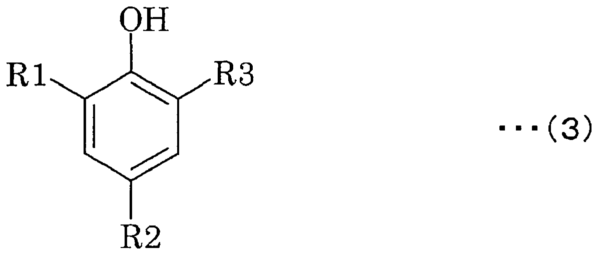 wherein R1 to R3 each independently represent a hydrogen group or an electron donating group.

5. The nonaqueous electrolyte according to claim 3, wherein
the phosphorus antioxidant is a compound represented by the formula (4): 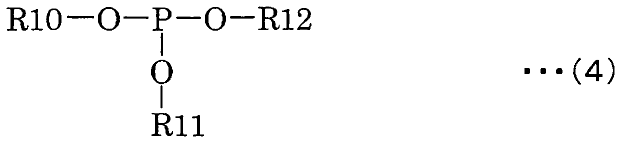 wherein R10 to R12 each independently represent an alkyl group or an aryl group, which may have a substituent.

6. The nonaqueous electrolyte according to claim 3, wherein
the sulfur antioxidant is a compound represented by the formula (5): 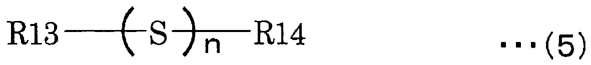 wherein R13 and R14 each independently represent a hydrocarbon group having 3 or more carbon atoms, which may have a substituent, and n is 1 or 2.

7. The nonaqueous electrolyte according to claim 3, wherein
the amine antioxidant is a compound represented by the formula (6): 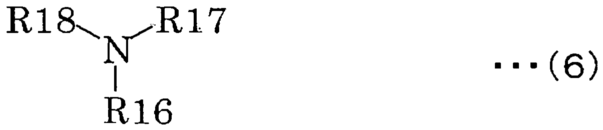 wherein R16 represents a hydrocarbon group, which may have a substituent, and R17 and R18 each independently represents a hydrogen group or a hydrocarbon group, provided that R17 and R18 may be bonded to each other.

8. The nonaqueous electrolyte according to claim 1, wherein
the halogenated carbonate ester represented by the formula (1) or (2) is at least one selected from the group consisting of fluoromethyl carbonate, bis(fluoromethyl) carbonate, 4-fluoro-1,3-dioxolan-2-one and 4,5-difluoro-1,3-dioxolan-2-one.

9. A nonaqueous electrolyte cell comprising:
a positive electrode,
a negative electrode and
a nonaqueous electrolyte,
the nonaqueous electrolyte containing:
a solvent,
an electrolyte salt and
an antioxidant,
the solvent containing a halogenated carbonate ester represented by the formula (1) or (2),
a content of the halogenated carbonate ester being from 0.1 to 50% by mass based on the nonaqueous electrolyte, and
a content of the antioxidant being from 0.01 to 5,000 ppm based on the nonaqueous electrolyte: 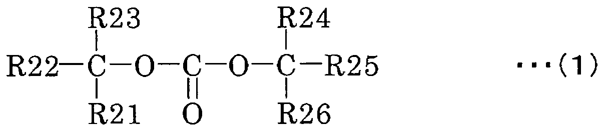 wherein R21 to R26 each independently represent a hydrogen group, a halogen group, an alkyl group or a halogenated alkyl group, provided that at least one of R21 to R26 represents a halogen group or a halogenated alkyl group, 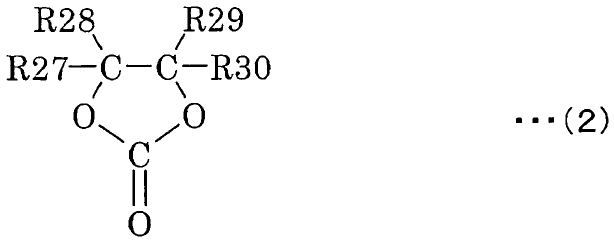 wherein R27 to R30 each independently represent a hydrogen group, a halogen group, an alkyl group or a halogenated alkyl group, provided that at least one of R27 to R30 represents a halogen group or a halogenated alkyl group.

10. The nonaqueous electrolyte cell according to claim 9, wherein
the negative electrode contains, as a negative electrode active substance, a carbon material, or a material that is capable of occluding and releasing lithium and has at least one kind of a metallic element and a metalloid element as a constitutional element.
